# EUROPÄISCHE PATENTANMELDUNG

(11) **EP 4 722 560 A2**
(43) Veröffentlichungstag der Anmeldung: **08.04.2026**
(21) Anmeldenummer: 26160442.5
(22) Anmeldetag: 10.12.2021
(51) Int. Cl.: F16G 13/16

(54) **ENERGIEFUHRÜNGSKETTEN FÜR LANGE VERFAHRWEGE, INSBESONDERE MIT LAUFROLLEN**

(30) Priorität: 10.12.2020 DE 202020107151 U
(62) Teilanmeldung aus: 21845088.0
(71) Anmelder: igus SE & Co. KG, 51147 Köln (DE)
(72) Erfinder: Steeger, Ralf, 53797 Lohmar (DE); Hermey, Andreas, 53773 Hennef (DE)
(74) Vertreter: Lippert Stachow Patentanwälte Rechtsanwälte

(57) **Zusammenfassung**

Die Erfindung betrifft Energieführungsketten (10) zur Führung von Leitungen, wobei die Energieführungskette (10) zwei Stränge bestehend aus alternierend aufeinanderfolgenden ersten und zweiten Seitenteilen (40, 50) aufweist..

Es ist vorgesehen, dass die ersten Seitenteile (40) gabelartig ausgeführt sind mit zwei in Längsrichtung gegenüberliegenden Gabelbereichen (40A, 40B), die je ein Paar seitlich beabstandeter Seitenwände (42) mit einer Laschenaufnahme (44) dazwischen aufweisen, und die zweiten Seitenteile (50) laschenartig ausgeführt sind mit zwei in Längsrichtung gegenüberliegenden Laschenbereichen (50A, 50B), welche jeweils in eine Laschenaufnahme (44) eines benachbarten ersten Seitenteils (40) eingreifen.

Erfindungsgemäß ist zwischen den Seitenwänden (42) des Gabelbereichs des ersten Seitenteils (40) eine zur Laschenaufnahme (44) hin offene Führungsnut (46) gebildet, wobei der Laschenbereich (50A, 50B) des verbundenen zweiten Seitenteils (50) mit mindestens einem Führungsvorsprung (56) in die Führungsnut (46) des ersten Seitenteils (40) eingreift.

## Beschreibung

Die Erfindung betrifft allgemein Energieführungsketten zur dynamischen Führung von Leitungen, insbesondere von Versorgungsleitungen wie Kabeln und Schläuchen oder dergleichen, und speziell Energieführungsketten für besonders lange Verfahrwege.

Die Erfindung betrifft gemäß einem Aspekt insbesondere aber nicht ausschließlich Energieführungsketten, die mit Laufrollen ausgerüstet sind, welche ein Abrollen der Energieführungskette beim Verfahren ermöglichen. Solche Energieführungsketten werden auch als Rollenketten bezeichnet. Die Erfindung betrifft gemäß weiteren Aspekten jedoch auch Energieführungsketten die zwecks Verringerung auftretender Kräfte abgleitend gestaltet sein können, d.h. gegebenenfalls ohne Laufrollen.

In bewährter Gestaltung haben Energieführungsketten gelenkig miteinander verbundene Kettenglieder, die einen Aufnahmeraum zum Schutz der zu führenden Leitungen bilden. Die Kettenglieder umfassen zueinander parallele Seitenlaschen. Die Seitenlaschen bzw. Seitenteile sind in Längsrichtung zu je zwei seitlich gegenüberliegenden Strängen bzw. sog. Laschensträngen verbunden, die wiederum durch Traversen bzw. Querstege miteinander verbunden und typisch parallel zueinander gehalten sind. Dabei sind je zwei in Längsrichtung benachbarte Kettenglieder jeweils mit ihren Seitenteilen um eine gemeinsame Schwenkachse gegeneinander verschwenkbar.

Bei langen Verfahrwegen ist die Energieführungskette typisch so verfahrbar, dass sie eine Art Schlaufe bildet, mit einem Obertrum, einem Untertrum und einem die beiden Trume verbindenden Umlenkbereich. Typisch bei langen Verfahrwegen ist, dass das Obertrum auf dem Untertrum aufliegend, entweder abrollend (Rollenkette), oder auch abgleitend (Gleitkette) verfahrbar ist.

Eine derartige gattungsgemäße Energieführungskette ist z.B. aus EP2010802B1 bekannt. Diese ist mit Laufrollen an zumindest einigen Kettengliedern ausgerüstet, die ein abrollendes Verfahren der Energieführungskette, nämlich der Kettenglieder des Obertrums auf den Kettengliedern des gegenüberliegenden Untertrums erlauben. So werden die auftretenden Kräfte, insbesondere Zugkräfte, erheblich reduziert bzw. überhaupt erst besonders lange Verfahrwege, teilweise deutlich über 100m ermöglicht.

Bei der Energieführungskette gemäß EP2010802B1 ist die Rotationsachse der Laufrollen jeweils koaxial zur Schwenkachse des entsprechenden Paars gelenkig verbundener Seitenteile angeordnet bzw. fällt mit dieser zusammen. EP2010802B1 offenbart eine Energieführungskette nach dem Oberbegriff aus Anspruch 1 und wird für dessen Gegenstand als nächstliegender Stand der Technik betrachtet. Diese Bauweise hat sich in der Praxis bereits sehr bewährt. Konstruktiv erfordert sie jedoch zumindest sechs unterschiedliche Seitenteile, je eine gekröpfte Lasche und ein Paar aus zwei Speziallaschen für die Laufrollen, wobei diese Seitenteile für jeden Laschenstrang gespiegelt, d.h. in zwei spiegelbildlichen Ausführungen, hergestellt werden müssen.

Weitere Energieführungsketten mit Laufrollen für lange Verfahrwege hat die Anmelderin in WO 99/57457 A1 (vgl. FIG.1), in EP2010800B1, in EP2010802B1 oder auch in WO 2013/156469 A1 offenbart.

Weitere Beispiele vorbekannter Energieführungsketten mit Rollen finden sich in EP2549144A1 sowie in DE 20 2019 105 730 U1. In den beiden letztgenannten Schriften wird vorgeschlagen, die Führungsrollen beweglich bzw. gedämpft an den Laschen zu lagern. Dies ist konstruktiv aufwändig und wartungsanfällig. Außerdem ermöglicht die hierin vorgeschlagene Gestaltung nur vergleichsweise kleine Durchmesser der Laufrollen, was u.a. für einen möglichst ruhigen Lauf bzw. die Laufruhe nachteilig ist.

Gemäß einem ersten Aspekt der Erfindung besteht eine erste Aufgabe ausgehend vom vorgenannten Stand der Technik darin, eine möglichst robuste Bauweise einer Energieführungskette mit Laufrollen vorzuschlagen, die einerseits eine hohe Laufruhe bietet und andererseits einfacher herstellbar ist. Insbesondere soll die Anzahl erforderlicher unterschiedlicher Seitenteile reduziert werden. Der Gegenstand des Anspruchs 1 betrifft den ersten Aspekt und die erstgenannte Aufgabe.

Gemäß einem unabhängigen zweiten Aspekt soll die Querstabilisierung bei Energieführungsketten, insbesondere abgleitenden oder abrollenden Energieführungsketten für lange Verfahrwege, verbessert werden. Gemäß einem unabhängigen dritten Aspekt soll der Kraftfluss zwischen den gelenkig verbundenen Seitenteilen in ihrer Strecklage verbessert werden. Der Gegenstand des Anspruchs 16 betrifft den zweiten und/oder dritten Aspekt und die entsprechenden Aufgaben. Weitere unabhängige Erfindungsaspekte ergeben sich aus der nachfolgenden Beschreibung.

### ERSTER ASPEKT

Die vorgenannte erste Aufgabe wird, insbesondere bei einer Energieführungskette mit Laufrollen gemäß dem Oberbegriff aus Anspruch 1 im Kerngedanken durch eine besondere Anwendung des Prinzips der Gabel-Kettenlaschen gelöst. Hierzu kommen erfindungsgemäß zwei alternative Gestaltungsvarianten in Betracht.

Gemäß einer ersten Variante des ersten Aspekts ist erfindungsgemäß vorgesehen, dass jeder der beiden Stränge (Laschenstränge) aus alternierend aufeinanderfolgenden ersten Seitenteilen und davon verschiedenen zweiten Seitenteilen besteht, wobei die ersten Seitenteile - in Art doppelter Gabellaschen - beidendseitig gabelartig ausgeführt sind, nämlich mit zwei in Längsrichtung gegenüberliegenden Gabelbereichen, die jeweils ein Paar seitlich beabstandeter Seitenwände aufweisen, zwischen denen je eine Laschenaufnahme gebildet ist. Entsprechend sind die zweiten Seitenteile in korrespondierender Bauart in Art von Doppellaschen bzw. Doppelgabel-Laschen ausgeführt, nämlich mit zwei in Längsrichtung gegenüberliegenden Laschenbereichen, die jeweils in eine Laschenaufnahme im gabelartigen Bereich eines benachbarten ersten Seitenteils eingreifen können.

Gemäß einer zweiten Alternative zum ersten Aspekt ist erfindungsgemäß vorgesehen, dass jeder der beiden Stränge (Laschenstränge bzw. Seitenstränge) aus aufeinanderfolgenden Seitenteilen besteht, die ähnlich einseitiger Gabellaschen ausgeführt sind. Dabei hat jede dieser Gabellaschen, einerseits einen Gabelbereich, der ein paar seitlich beabstandeter Seitenwände mit einer dazwischenliegenden Laschenaufnahme aufweist. Andererseits bzw. in Längsrichtung gegenüberliegend hat die Gabellasche einen Laschenbereich, welcher in eine entsprechende Laschenaufnahme eines benachbarten Seitenteils eingreifen kann. Die aufeinanderfolgenden Seitenlaschen können dann identisch bzw. baugleich sein.

Durch diese vergleichsweise einfachen Gestaltungsmaßnahmen werden kombinatorisch zwei erhebliche Vorteile erzielt. Bei Erzielung einer hohen Stabilität der Verbindung zwischen den einzelnen Seitenteilen und der Laschenstränge insgesamt, insbesondere hoher Seitenstabilität, wird zugleich die erforderliche Anzahl unterschiedlicher Seitenteile für den Aufbau der Laschenstränge auf lediglich zwei Bauteile (erste Variante) oder sogar auf nur ein erforderliches Seitenteil pro Strang (Variante zwei) reduziert. Dies reduziert die Herstellungskosten, den Lagerhaltungsaufwand und vereinfacht zudem spürbar die Montage der Seitenteile zu den Laschensträngen bzw. Kettengliedern.

Zwei weitere wesentliche Vorteile bzw. Eigenschaften beider Alternativen des ersten Aspekts liegen einerseits darin, dass eine durchgehend gleichbleibende Kettenteilung über zumindest die überwiegende oder gesamte Länge der Kette ermöglicht wird. Dies ist u.a. für das dynamische Verhalten vorteilhaft. Andererseits erlaubt die vorgeschlagene Gestaltung auch einheitliche, jeweils identische Gelenkverbindungen zwischen den Kettengliedern. Hierbei kann insbesondere für jede Gelenkverbindung ein separater Gelenkbolzen, z.B. aus einem günstigeren bzw. geeigneteren Werkstoff eingesetzt werden. Hierdurch kann die Lebensdauer erhöht, Wartung vereinfacht und/oder ein Nachrüsten bzw. eine Reparatur ohne Tausch von Seitenteilen ermöglicht werden.

Das Gabelprinzip ist weiterhin vorteilhaft hinsichtlich Querstabilität in seitlicher Richtung und Torsionsfestigkeit der Laschenstränge, was besonders für den Geradlauf bei langen Ketten bedeutsam ist.

In einer bevorzugten Gestaltung sind somit sämtliche Seitenteile eines jeden Strangs jeweils durch separate Gelenkbolzen schwenkbar miteinander verbunden zur Bildung der typischen Gelenk-/Bolzen Schwenkverbindung zwischen den Kettengliedern. Dies vereinfacht zudem die Montage separater Lagerungen, z.B. von Kugellagern oder Gleitlagern für die Laufrollen bzw. die Schwenkverbindung.

Hinsichtlich der Angabe, dass die Stränge aus zwei alternierenden oder einem identischen Seitenteil-Typ bestehen bzw. aufgebaut sind ist der Begriff Strang (Laschenstrang/Kettenstrang) als eine zumindest über die überwiegende Länge der Energieführungskette erstreckte Verkettung bzw. Abfolge miteinander verbundener Seitenteile zu verstehen, d.h. einer Mehrzahl Seitenteile mit jedenfalls mindestens drei Seitenteilen, typisch mindestens einige hundert Seitenteile. Endseitige Anschlusselemente für jeden Strang am beweglichen und stationären Ende der Kette können bedarfsweise andersartig ausgestaltet sein. Der Begriff Strang / Laschenstrang kann insbesondere als die vollständige Abfolge von Seitenteilen, ausgenommen die Anschlusselemente, verstanden werden.

In Kombination mit einer koaxialen Anordnung der Laufrollen, so dass deren Drehachsen mit der Schwenkachse zweier schwenkgelenkig verbundener Seitenteile zusammenfallen können Laufrollen mit großem Durchmesser eingesetzt werden, ohne dass die Kettenteilung vergrößert wird, **d.h.** dass eine möglichst kurze Kettenteilung erzielbar ist. Somit wird trotz reduzierter Teileanzahl weiterhin eine besonders hohe Laufruhe erzielt. Ein weiterer wesentlicher Vorteil der vorgeschlagenen Bauweise nach dem ersten Aspekt besteht also darin, bei kurzer Kettenteilung vergleichsweise große Rollendurchmesser zu ermöglichen und somit einen besonders ruhigen Lauf beim Abrollen zu erzielen. Es können insbesondere Rollendurchmesser grösser als 50%, insbesondere grösser als 75% der Laschenbauhöhe eingesetzt werden, was als von anderen Merkmalen unabhängig vorteilhafter Aspekt zu sehen ist.

Es ist hierbei nicht erforderlich, an jedem Paar verbundener Seitenlaschen Laufrollen vorzusehen. Laufrollen können lediglich zu jedem n-ten Kettenglied vorgesehen werden, mit n>> 2. Die Laufrollen sind vorzugsweise in die Seitenteile eingelassen und stehen zur Innenseite der Schlaufe bzw. des Innenbereichs freiliegend hervor um auf dem gegenüberliegenden Trum abrollen zu können. Durch die Verwendung von Laufrollen kann jeder Laschenstrang reibungsarm relativ zum gegenüberliegenden Trum abrollen. Dies reduziert im Betrieb aufkommende Kräfte, insbesondere Zugkräfte, d.h. den Verschleiß und/oder erlaubt insgesamt größere Verfahrwege bei hoher Lebensdauer.

Die Seitenteile weisen typisch eine dem jeweils anderen Trum zugewandte Schmalseite und eine davon abgewandte Schmalseite auf. Die Schmalseiten liegen allgemein in Längsrichtung und können dabei im Wesentlichen parallel zur Längsrichtung der Energieführungskette verlaufen.

In einer bevorzugten Weiterbildung ist vorgesehen, dass der Abstand der Schwenkachse zweier verbundener Seitenteile bzw. Kettenglieder zu der dem anderen Trum zugewandten Schmalseite geringer ist, als zu der abgewandten Schmalseite.

Besonders bevorzugt ist dabei die dem anderen Trumen zugewandte Schmalseite so gestaltet, dass diese in gestreckter Konfiguration bzw. in Strecklage der Trume eine im Wesentlichen durchgehende Lauffläche bildet, auf welcher das gegenüberliegende Trumen abgleiten und/oder insbesondere mittels Laufrollen abrollen kann.

Eine entsprechend asymmetrisch bzw. exzentrisch angeordnete Schwenkachse erlaubt bezüglich der koaxialen Anordnung der Drehachse der Laufrollen eine zusätzliche Vergrößerung des Laufrollen-Durchmessers und auch eine Verringerung der technisch notwendigen Spaltmaße zwischen den Seitenteilen. Die durchgehende Lauffläche wird dabei vorzugsweise seitlich neben der Ebene der Laufrollen realisiert (bzw. ist als die Lauffläche ohne Rollen zu verstehen).

In einer Ausführungsform kann jedes Paar verbundener Seitenteile jeweils mindestens eine Laufrolle aufweisen. Es können insbesondere Laufrollen aus Kunststoff eingesetzt werden.

Zwecks Gewichtsreduzierung und gleichzeitiger Vereinfachung der Montage ist in bevorzugter Weiterbildung vorgesehen, dass insbesondere alle verwendeten Seitenteile, insbesondere die gabelartig ausgeführten ersten Seitenteile und/oder auch die laschenartig ausgeführten zweiten Seitenteile, jeweils einteilig aus Kunststoff hergestellt sind, insbesondere aus faserverstärktem Kunststoff. Dies erlaubt eine gewichtssparende und preiswerte Herstellung der Seitenteile als Kunststoff-Spritzgussteile.

Eine besonders bevorzugte Weiterbildung - die als unabhängiger zweiter Aspekt bzw. für sich genommen erfindungserheblich zu betrachten ist (s. unten) - sieht vor, dass in Bezug auf ein verbundenes Seitenteilpaar, das eine Seitenteil zwischen den Seitenwänden seines Gabelbereichs eine zur Laschenaufnahme hin offene Führungsnut bildet, die seitlich gegenüberliegende Querführungsflächen aufweist, welche sich im Wesentlichen kreisbogenförmig um die Schwenkachse erstrecken. Hierbei weist der Laschenbereich des verbundenen anderen Seitenteils vorteilhaft mindestens einen Führungsvorsprung auf, der kreisbogenförmige Gegenflächen zur Führung an den Querführungsflächen der Führungsnut bildet. Somit kann der Führungsvorsprung zur zusätzlichen bzw. gesteigerten Seitenstabilisierung in die Führungsnut eingreifen, indem die Gegenflächen seitlich durch die Querführungsflächen geführt sind. Eine entsprechende Führungsnut und ein entsprechender Führungsvorsprung können vorzugsweise mittig, insbesondere symmetrisch, zur Längsmittelebene der Seitenlasche (Längsrichtung) und/oder zwischen jeweils zwei vorgesehenen Laufrollen angeordnet sein. Die Querführungsflächen und zusammenwirkenden Gegenflächen erstrecken sich dabei insbesondere in Ebenen parallel zur Längsrichtung bzw. senkrecht zur Schwenkachse.

In einer vorteilhaften Weiterbildung - gemäß einem unabhängig erfindungserheblichen dritten Aspekt (s. unten) - kann vorgesehen sein, dass in Bezug auf ein verbundenes Seitenteilpaar, die beiden verbundenen Seitenteile gemeinsam mindestens oder genau drei räumlich getrennte und um die Schwenkachse verteilt angeordnete Paare aus zusammenwirkenden Streckanschlagflächen aufweisen. Diese Streckanschlagflächen stehen in Strecklage (gestreckter Schwenkstellung beider Seitenteile des verbundenen Paars) miteinander in Anschlag und ermöglichen durch ihre Anzahl und Anordnung einen besonders günstigen Kraftfluss sowie eine Entlastung der Gelenkverbindung zwischen den Seitenteilen bezüglich Scherkräften, insbesondere aber nicht ausschließlich in freitragenden Teilen oder zwischen Umlenkbogen und bewegtem Endanschluss. Dabei können die Paare zusammenwirkender Streckanschlagflächen zueinander winkelmäßig näherungsweise gleich verteilt um die Schwenkachse am jeweiligen Seitenteil angeordnet werden. Näherungsweise gleich verteilt bedeutet hierbei insbesondere, in einer Ebene senkrecht zur Schwenkachse betrachtet, in der anschlagswirksamen gestreckten Stellung in etwa mit einem Winkelabstand von 120° +/- ca. 15°-30° um die Schwenkachse verteilt.

Insbesondere aber nicht ausschließlich bei der letztgenannten Weiterbildung ist es vorteilhaft, wenn, in Bezug auf ein verbundenes Seitenteilpaar, ein Seitenteil einen Zughaken aufweist der, in gestreckter Schwenkstellung, zwecks Zugkraftübertragung in eine Aussparung, Hinterschneidung oder dgl. am anderen Seitenteil eingreift bzw. hintergreift.

Ausführungsformen mit entsprechenden Zughaken sind allgemein für Energieführungsketten vorteilhaft, ungeachtet der gewählten Gestaltung der Seitenlaschen und insoweit als unabhängiger Erfindungsaspekt anzusehen.

Dabei kann der Zughaken vorzugsweise an bzw. durch eine Anschlagzunge bzw. einem Anschlagvorsprung gebildet sein, die zugleich eine der vorgenannten Streckanschlagflächen bildet. Ein derartiger Anschlagvorsprung kann insbesondere in eine hierfür vorgesehene Anschlagtasche des jeweils anderen Seitenteils eingreifen.

Zur Vermeidung von Störanfälligkeit und zum Schutz der Rollen und deren Lagerung sind die Laufrollen jeweils bevorzugt in Aufnahmen zwischen den benachbarten Seitenteilen aufgenommen. Die Laufrollen können dabei über die Schmalseite der jeweiligen Seitenteile nur zu einem vergleichsweise geringen Anteil bzw. nur geringfügig vorstehen. Insbesondere können Überstand oder Längsabstand zwischen Rollen derart sein, dass ein Abgleiten von zwischen rollentragenden Kettengliedern vorgesehenen weiteren, rollenlosen Kettengliedern vermieden wird.

In Verbindung mit dem ersten Aspekt wird vorzugsweise jede Laufrolle bevorzugt zwischen einer Seitenwand eines Gabelbereichs und dem in die Aufnahme dieses Gabelbereichs eingreifenden Laschenbereich angeordnet, d. h. innerhalb der Laschenaufnahme zwischen überlappenden Wandbereichen der Seitenteile.

Besonders bevorzugt sind an rollentragenden Seitenteilpaaren jeweils zwei getrennte Laufrollen mit gleicher Achse beidseitig des Laschenbereichs in der Laschenaufnahme bzw. einem Freiraum hierzu vorgesehen. Eine Anordnung mit jeweils zwei Rollen an den Kettengliedern ist besonders bei sehr schwerer Leitungsbefüllung vorteilhaft und vereinfacht dank schmalerer Rollen ein seitlich versetztes Abrollen, sodass die Laufrollen nicht übereinander fahren. Die Laschenaufnahme dient somit mit einem innenliegenden Teilbereich zugleich als Rollenaufnahme, sodass die Konstruktion weitergehend vereinfacht ist und sehr stabilere Mittelbereiche der Laschen ermöglicht sind. Es ist auch möglich, z.B. bei weniger schwerer Befüllung, an rollentragenden Seitenteilpaaren seitlich alternierend jeweils nur eine Rolle vorzusehen, auch wenn diese für zwei Rollen gestaltet sind.

Hinsichtlich der Laufflächen für paarweise angeordnete Laufrollen ist bevorzugt vorgesehen, dass an der dem jeweils anderen Trum zugewandten Schmalseite der Seitenteile sowohl mindestens eine Seitenwand des Gabelbereichs, als auch der darin eingreifende Laschenbereich jeweils einen Laufflächenabschnitt für eine der beiden Laufrollen bilden bzw. bereitstellen. Die Laufflächenabschnitte in Längsrichtung auf Höhe der Rollen liegen dabei seitlich versetzt neben der bzw. den Laufrollen. In Längsrichtung aufeinanderfolgende Abschnitte der Lauffläche bilden dazwischen bevorzugt einen auf das technisch notwendige Minimum reduzierten Spalt in der Strecklage.

Für mechanisch robuste und insbesondere verschleißarme Gelenkverbindungen zwischen den Kettengliedern sieht eine Weiterbildung vor, dass die beiden Seitenwände jedes Gabelbereichs und der darin eingreifende Laschenbereich jeweils eine in Querrichtung durchgehende Aufnahmeöffnung für einen separaten Gelenkbolzen aufweisen. So können die Seitenteile durch einen separaten Gelenkbolzen, der durch die fluchtenden Aufnahmeöffnungen montierbar ist, relativschwenkbar miteinander verbunden werden. So kann der Gelenkbolzen aus einem Kunststoff mit tribologischen Zusätzen für eine günstige Gleitpaarung und/oder aus einem vom Kunststoff der Seitenteile verschiedenen Kunststoff hergestellt sein. Auch ein Gelenkbolzen aus Metall ist denkbar. Zur Vereinfachung der Montage ist der Gelenkbolzen vorzugsweise zweiteilig ausgeführt um leichtgängig von beiden Seiten eingesetzt werden zu können und durch geeignete Verbindungstechnik, beispielsweise eine Schraubverbindung zusammengefügt zu werden.

In einer zur vereinfachten Montage bevorzugten Ausführung umfasst der Gelenkbolzen vorzugsweise zwei Bolzenteile, insbesondere aus Kunststoff, welche durch mindestens eine, bevorzugt durch genau eine Schraube miteinander verschraubt sind. Als Schraube kann dabei vorzugsweise eine selbstschneidende Schneidschaube, vorzugsweise aus Edelstahl, für Kunststoff eingesetzt werden. So kann die Schraube in ein Kernloch eines der Bolzenteile in einem einfachen Arbeitsschritt eingeschraubt werden. Bei Verwendung einer einzigen Schraube zur Montage des Gelenkbolzens liegt diese vorzugsweise koaxial zur Schwenkachse.

Zumindest das mit der/den Schraube(n) zusammenwirkende Bolzenteil des separaten Gelenkbolzen ist bevorzugt drehfest mit einem Seitenteil, insbesondere dem innenliegenden Laschenbereich, verbunden, beispielsweise durch einen geeigneten Formschluss konjungiert gestalteter Vorsprünge und/oder Vertiefungen bzw. Nasen u. Vertiefungen. An dem nach Verschraubung entsprechend drehfest am Laschenbereich angeordneten Gelenkbolzen können dann im jeweiligen Gabelbereich dessen beide Seitenwände mittels ihrer Aufnahmeöffnungen um die durch den Gelenkbolzen definierte Schwenkachse schwenkbar am Gabelbereich gelagert sein. Dies erlaubt unter anderem eine in Querrichtung besonders stabile Gelenkverbindung, d. h. erhöht weiter die Seitenstabilität.

Gemäß einer weiteren vorteilhaften Gestaltung kann vorgesehen sein, dass jeweils ein Gleitlagerring, z.B. aus einem Tribopolymer, zur schwenkbaren Lagerung der Seitenwände vorgesehen ist. Dies ermöglicht eine optimierten Gleitlagerpaarung. Der Gleitlagerring kann insbesondere drehbar mit dem Gelenkbolzen verbunden bzw. an diesem vorgesehen sein und zugleich drehfest mit einer der Seitenwände verbunden sein, sodass Gleitreibung nur zwischen Gelenkbolzen und Gleitlagerring entsteht, und eine Reparatur zur Wiederherstellung einer spielfreien Gelenkverbindung ermöglicht wird. Die drehfeste Befestigung mit der Aufnahmeöffnung kann durch Übermaß des Gleitlagerrings bzw. Presspassung, ohne Mehraufwand beim Verschrauben des tragenden Gelenkbolzens bewirkt werden.

Die Laufrollen sind jeweils vorzugsweise am Gelenkbolzen drehbar gelagert angeordnet, sodass eine weitere Vereinfachung erzielt und der Austausch der Laufrollen bzw. deren Lagerung erleichtert wird. Die Laufrollen können dabei insbesondere anhand geeigneter Kugellager am Gelenkbolzen gelagert sein, um möglichst reibungsarmes Verfahren bzw. hohe Lebensdauer zu erzielen.

Durch den erstgenannten Aspekt kann erfindungsgemäß erzielt werden, dass in beiden Strängen jeweils baugleiche Seitenteile vorgesehen sind, insbesondere jeweils identische gabelartige erste Seitenteile und identische laschenartige zweite Seitenteile, die alternierend aufeinanderfolgend angeordnet und zu Laschensträngen verbunden sind.

Insbesondere in der ersten Variante des ersten Aspekts können die Seitenteile des ersten und/oder des zweiten Typs insbesondere bezüglich ihrer Quermittelebene (Ebene senkrecht zur Längsrichtung) vorteilhaft im Wesentlichen spiegelsymmetrisch bzw. funktionssymmetrisch ausgeführt sein. Funktionssymmetrisch bedeutet hierbei, dass dieselben Seitenteile durch entsprechende Drehung in beiden Strängen gleichwertig verwendbar sind, wobei gegebenenfalls lediglich die Befestigung der Querstege anzupassen ist. Querstege zwischen den Laschensträngen müssen nicht zwingend an jedem Kettenglied vorgesehen sein.

Bezüglich ihrer räumlichen Anordnung und Geometrie können die ersten Seitenteile mit beidseitigen Gabelbereichen als Außenlaschen bzw. daraus gebildete Kettenglieder als Außenglieder betrachtet werden. Dementsprechend können die zwischen den Gabeln innenliegenden zweiten Seitenteile als Innenlaschen bzw. daraus gebildete Kettenglieder als Innenglieder betrachtet werden.

Gemäß dem ersten Aspekt kann insbesondere vorgesehen sein, dass die Stränge rollentragende Seitenteilpaare und rollenlose Seitenteilpaare aufweisen. Hierbei sind die Seitenteile für sich genommen (ohne Rollen und deren Lagerung) vorzugsweise baugleich.

Bei Vorsehen von rollenlosen Seitenteilpaaren ist es vorteilhaft, die an den Schmalseiten ansonsten offenen Aufnahmen für die Laufrollen in den rollenlosen Seitenteilpaaren durch eine geeignete Verschlussfläche zu verschließen. Dies kann erreicht werden, indem entweder anstelle der Laufrollen ein separater Einsatz mit einer Verschlussfläche im Freiraum der Rollenaufnahme vorgesehen wird, oder aber indem insbesondere am Laschenbereich, an den Seitenteilen der rollenlosen Seitenteilpaare entsprechende seitlich erstreckte Verschlussflächen mit angeformt sind. Letzteres kann mit geringem Aufwand bereits bei der Herstellung, insbesondere durch geeignete Anpassung des Spritzgussverfahrens, erzielt werden. Ansonsten kann das Seitenteil mit Verschlussfläche jedoch baugleich sein zum entsprechenden Seitenteil der rollentragenden Seitenteilpaar. So kann die Schmalseite auch bei rollenlosen Seitenteilen schützend geschlossen werden und u.a. ungewollte Schmutzansammlung reduziert oder vermieden werden.

Hinsichtlich hoher Laufruhe ist es vorteilhaft, wenn der Außendurchmesser der Laufrollen mindestens 50%, vorzugsweise mindestens 66%, besonders bevorzugt mindestens 75% der Bauhöhe der Seitenteile entspricht, d.h. des Abstands von Schmalseite zu Schmalseite, insbesondere bezogen auf das höher bauende Seitenteil bei ungleicher Bauhöhe, wie beispielsweise das gabelartige erste Seitenteil. Bevorzugt haben die ersten und zweiten Seitenteile jedoch gleiche Bauhöhen.

In bevorzugter Weiterbildung verläuft das Obertrum geringfügig seitlich versetzt auf dem Untertrum abrollend, insbesondere auf den vorgenannten weitestgehend durchgehenden Laufflächen. Zur Erzielung eines geeigneten Seitenversatzes zwischen den gestreckten Trumen sind vorzugsweise an den bzw**.** an mindestens einigen Querstegen der Kettenglieder, die dem jeweils anderen Trum zugewandt sind, an der Außenseite Führungselemente vorgesehen, welche so gestaltet sind, dass beim Verfahren die Führungselemente ineinander greifen. Die Führungselemente können insbesondere kammartig sein und miteinander kämmen und den gewünschten seitlichen Versatz des Obertrums gegenüber dem Untertrum bewirken. Ein wesentlicher Vorteil dabei ist, dass die Laufrollen aneinander vorbei abrollen können und nicht übereinander abrollen müssen, d.h. ungewolltes Springen des Obertrums wird vermieden. Ferner ist es ggf. möglich, die bei langen Verfahrwegen typische Verwendung von Führungsrinnen durch entsprechende Führungselemente an den Querstegen zu vermeiden. Dies reduziert die Systemkosten.

### ZWEITER ASPEKT

Zur Lösung der eingangs genannten zweiten Aufgabe wird gemäß dem unabhängigen zweiten Aspekt, insbesondere bei einer Energieführungskette nach dem Oberbegriff aus Anspruch 16 vorgesehen, dass in Bezug auf ein verbundenes Seitenteilpaar, das eine Seitenteil zwischen den Seitenwänden des Gabelbereichs eine zur Laschenaufnahme hin offene Führungsnut bildet, die seitlich gegenüberliegende Querführungsflächen aufweist, welche sich kreisbogenförmig um die Schwenkasche erstrecken, und dass der Laschenbereich des verbundenen, nächsten bzw. anderen Seitenteils mit mindestens einem Führungsvorsprung, der kreisbogenförmige Gegenflächen zur Führung an den Querführungsflächen aufweist, in die Führungsnut des einen Seitenteils eingreift. Führungsnut und Führungsvorsprung sind dabei vorzugsweise mittig, insbesondere symmetrisch zur Längsmittelebene der Seitenteile angeordnet. Die Querführungsflächen und Gegenflächen liegen bevorzugt parallel zur Hauptebene der Seitenteile, d.h. in Längs- u. Höhenrichtung.

Durch diese Gestaltung kann der Führungsvorsprung zur gesteigerten Seitenstabilisierung in die Führungsnut eingreifen, indem die Gegenflächen seitlich durch die Querführungsflächen geführt sind. Eine entsprechende Führungsnut und eine entsprechender Führungsvorsprung können vorzugsweise mittig, insbesondere symmetrisch zur vertikalen Längsmittelebene der Seitenlasche (Längsrichtung) und/oder zwischen jeweils zwei vorgesehenen Laufrollen angeordnet sein. Die Querführungsflächen und zusammenwirkenden Gegenflächen erstrecken sich dabei insbesondere in Ebenen parallel zur Längsrichtung bzw. senkrecht zur Schwenkachse.

Der zweite Aspekt ist jedoch nicht auf Energieführungsketten mit Laufrollen beschränkt, sondern insbesondere auch für abgleitende Energieführungsketten oder z.B. seitlich liegend verfahrende Energieführungsketten vorteilhaft.

Insbesondere in Kombination mit dem zweiten Aspekt ist vorteilhaft eine Anschlagdämpfung vorgesehen, in Form einer bogenförmigen Dämpfungsbrücke welche in radialer Richtung in Bezug auf die Schwenkachse vom einem Führungsvorsprung einer Seitenlasche, insbesondere über eine Aussparung vorsteht bzw. über den äußeren sonstigen Radius des Führungsvorsprungs radial herausragt. Die bogenförmige Dämpfungsbrücke ist dabei bevorzugt einteilig mit dem Führungsvorsprung bzw. dem Seitenteil hergestellt und in einer korrespondierenden Vertiefung im anderen Seitenteil, insbesondere in oder an der Führungsnut, verschwenkbar, welche Anlaufflächen bzw. Anlaufschrägen für die Dämpfungsbrücke bildet.

Die Dämpfungsbrücke und Vertiefung sind bevorzugt so angeordnet, dass die Dämpfungsbrücke in beide Schwenkrichtungen, d.h. in Richtung Strecklage und in Richtung vollständig abgewinkelter Relativstellung der Seitenteile, wirksam ist d.h. die Schwenkbewegung bremst bzw. dämpft. Die Anordnung ist bevorzugt so gewählt, dass eine Dämpfung der Schwenkbewegung nur im Endbereich der Schwenkbewegung, z.B. bei ca. 5° Winkelmass vor Erreichen der beiden Anschlagpositionen eintritt. Die Vertiefung kann so geformt sein, dass ihre Anlaufflächen bzw. Anlaufschrägen jeweils eine zur Endstellung hin zunehmende bzw. stärkere Verformung der Dämpfungsbrücke in Richtung der zugeordneten Aussparung bewirken. Die Dämpfungsbrücke kann zusätzlich zur Biegeverformung auch eine geringfügigere Keilwirkung mit den Anlaufflächen bzw. Anlaufschrägen haben.

### DRITTER ASPEKT

Zur Lösung der eingangs genannten dritten Aufgabe wird gemäß dem unabhängigen dritten Aspekt, insbesondere bei einer Energieführungskette nach dem Oberbegriff aus Anspruch 16 vorgesehen, dass in Bezug auf ein verbundenes Seitenteilpaar, beide verbundenen Seitenteile mindestens oder genau drei um die Schwenkachse verteilt angeordnete Paare zusammenwirkender Streckanschlagflächen aufweisen, welche in gestreckter Schwenkstellung beider Seitenteile in Anschlag stehen und vorzugsweise winkelmäßig näherungsweise gleichverteilt um die Schwenkachse angeordnet sind. Besonders bevorzugt sind dabei die Paare zusammenwirkender Streckanschlagflächen zueinander winkelmäßig näherungsweise gleich verteilt um die Schwenkachse am jeweiligen Seitenteil angeordnet. Näherungsweise gleich verteilt bedeutet hierbei insbesondere, in einer Ebene senkrecht zur Schwenkachse betrachtet, in der anschlagswirksamen gestreckten Stellung in etwa mit einem Winkelabstand von mindestens 90° um die Schwenkachse verteilt.

Diese Gestaltungen ermöglichen eine günstige Kraftübertragung zwischen den Kettengliedern in Strecklage und/oder eine Entlastung der Schwenkachsen bzw. Gelenkbolzen, was insbesondere bei besonders langen Energieführungsketten vorteilhaft wirkt, was bei Rollenketten oder Gleitketten besonders vorteilhaft ist.

### VIERTER ASPEKT

Zur Erzielung günstiger Kraftflüsse in einer Energieführungskette wird als weiterer unabhängiger Aspekt, allgemein für jede Bauart von Energieführungskette, insbesondere z.B. nach dem Oberbegriff aus Anspruch 16, vorgeschlagen, dass in Bezug auf ein verbundenes Seitenteilpaar, ein Seitenteil einen Zughaken aufweist welcher, in gestreckter Schwenkstellung beider Seitenteile, in eine korrespondierende Aussparung am anderen Seitenteil greift und somit eine Zugkraftübertragung in Längsrichtung über den Zughaken ermöglicht. Hierdurch wird u.a. auch die Gelenkverbindung entlastet, was besonders bei langen Ketten von Vorteil ist.

Weitere Merkmale gemäß den vorstehenden bevorzugten Weiterbildungen des ersten, zweiten und dritten Aspekts sind miteinander vorteilhaft kombinierbar, wie nachfolgende Ausführungsbeispiele zeigen. Insbesondere der dritte und der vierte Aspekt sind nicht auf Energieführungsketten mit Laufrollen beschränkt.

Die Erfindung betrifft auch als einzelne Baugruppe ein Seitenteilpaar für eine Energieführungskette aus zwei gelenkig verbundenen Seitenteilen mit den Merkmalen nach einem der vorgenannten Aspekte und/oder einer der o.g. vorteilhaften Weiterbildungen.

Eine Energieführungskette, insbesondere Rollenkette, im Sinne der Erfindung ist insbesondere, aber nicht ausschließlich, vorteilhaft in der Verwendung für lange Verfahrwege, insbesondere Verfahrwege länger als 100m und/oder für hohe Geschwindigkeiten.

Eine von vielen industriellen Anwendungen stellen Energieführungsketten an Krananlagen, insbesondere an Schiffsentladekranen dar.

Vorteilhafte Merkmale aller Aspekte sind untereinander kombinierbar und jeweils als für sich genommen erfindungserheblich zu verstehen.

Weitere Einzelheiten, Merkmale und Vorteile der Erfindung ergeben sich ohne Beschränkung des Vorstehenden aus der nachfolgenden, ausführlichen Beschreibung bevorzugter Ausführungsbeispiele anhand der beiliegenden Abbildungen. Diese zeigen:
**FIG.1****:** eine schematische Seitenansicht einer abrollenden Energieführungskette mit Laufrollen gemäß Stand der Technik;
**FIG.2A-2D****:** Teilansichten einer abrollenden Energieführungskette nach einem ersten Ausführungsbeispiel in Seitenansicht (FIG.2A), einer Vergrößerung hieraus (FIG.2B), in Frontansicht zweier abrollender Kettenglieder (FIG.2C) und in Draufsicht (FIG.2D);
**FIG.3A-3B****:** perspektivische Ansichten eines Paars von zwei Seitenteilen eines ersten und zweiten Typs der Energieführungskette aus FIG.2A-2D, in demontierter Explosionsansicht (FIG.3A) und in montierter, abgewinkelter Schwenkstellung (FIG.3B) der beiden Seitenteile verbunden;
**FIG.4A-4E****:** perspektivische Ansichten (FIG.4A-4B) einer doppelseitigen Gabellasche bzw. Außenlasche als erstes Seitenteil aus FIG.3A-3B, sowie einen Längsschnitt (FIG.4C) durch dessen Längsmittelebene (FIG.4C), eine Untersicht (FIG.4D) und eine perspektivische Ansicht in die Laschenaufnahme (FIG.4E);
**FIG.5A-5B****:** Perspektivansichten (FIG.5A-5B) einer Doppellasche bzw. Innenlasche als zweites Seitenteil aus FIG.3A-3B;
**FIG.6A-6D****:** Querschnitte auf Höhe der Schwenkachse durch ein Paar aus zwei verbundenen Seitenteilen, mit zwei Laufrollen (FIG.6A), ohne Laufrollen (FIG.6B) mit zwei separaten Verschlusselementen sowie, als Alternative dazu, ohne Laufrollen mit einer angeformten Verschlussfläche (FIG.6C), sowie eine Perspektivansicht eines Verschlusselements (FIG.6D) aus FIG.6B;
**FIG.7A-7F****:** diverse Schnittansichten eines Seitenteilpaars gemäß den bezeichneten Schnittebenen in den Querschnitten aus FIG.7A bzw. FIG.7D u.a. zur Veranschaulichung unterschiedlicher Schwenkanschläge zur Schwenkwinkelbegrenzung in gestreckter Lage (FIG.7A-7C) und in vollständig abgewinkelter Lage (FIG.7D-7F) zur Bildung des Umlenkbogens; und
**FIG.8A-8D****:** ein zweites Ausführungsbeispiel eines erfindungsgemäßen Seitenteils in Art einer Gabellasche, in Perspektivansicht von oben (FIG.8A), in Frontansicht (FIG.8B) im zentralen Längsschnitt (FIG.8C) und in Perspektivansicht von unten (FIG.8D);
**FIG.9A-9G****:** ein drittes Ausführungsbeispiel Seitenteilpaars bzw. den bezeichneten Vergrößerungen, im Querschnitt (FIG.9A), in drei Längsschnitten (FIG.9B-9D), gemäß den bezeichneten Schnittebenen in den Querschnitten aus FIG.9A, in Vergrößerungen (FIG.9F: J, FIG.9G: K) zur Veranschaulichung einer Dämpfungsbrücke in den zwei Schwenkstellungen aus FIG.9C u. FIG.9D und in einer Perspektivansicht der Doppellasche dieses Beispiels (FIG.9E); und
**FIG.10A-10C****:** eine Vergrößerung aus FIG.9A sowie zwei Perspektivansichten zur Darstellung einer Weiterbildung mit Gleitlageringen zur Schwenklagerung am Gelenkbolzen.

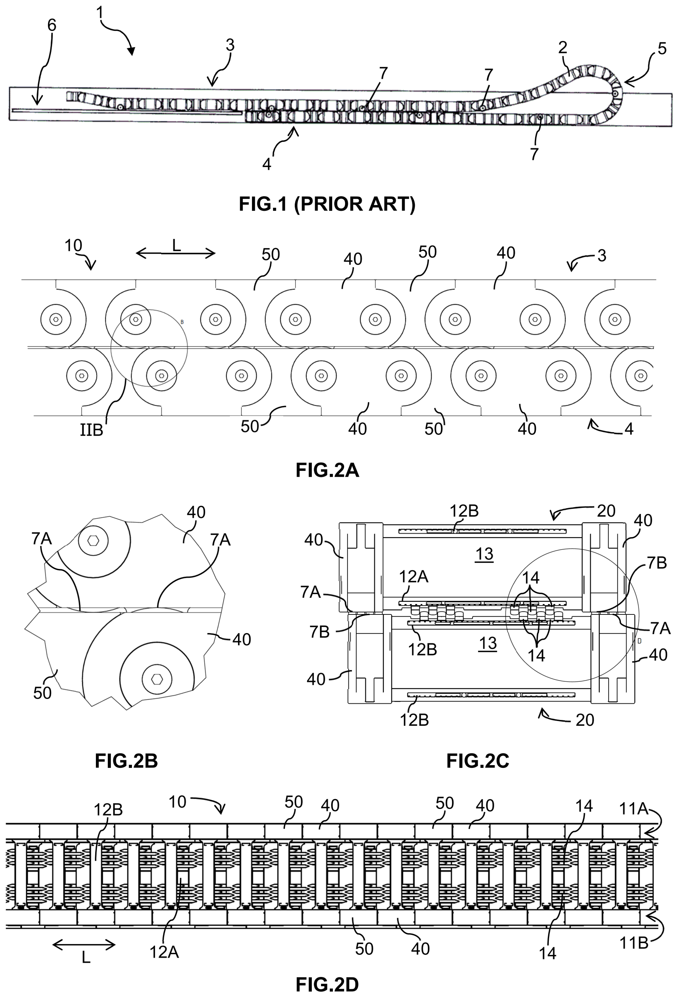

FIG.1 zeigt eine Energieführungskette 1 zur Führung von Versorgungsleitungen (nicht gezeigt), mit einer Anzahl gelenkig miteinander verbundener Kettenglieder 2, hier in an sich bekannter Bauart, z.B. gemäß WO 99/57457 A1. Die Energieführungskette 1 ist hin- und zurück verfahrbar und bildet dabei variabel eine Schlaufe, die ein Obertrum 3, ein Untertrum 4 und einen diese verbindenden Umlenkbogen bzw. Umlenkbereich 5 umfasst. Im Beispiel aus FIG.1 sind in regelmäßigen Abständen, an ausgewählten Kettengliedern 2 des Obertrums 3 und des Untertrums 4, Laufrollen 7 vorgesehen. Die Laufrollen 7 sind derart angeordnet, dass sie über dem Schalaufeninneren zugewandte Schmalseiten der Seitenteile in Richtung auf das jeweils gegenüberliegende Trum 3 bzw. 4 hervorstehen. Die Laufrollen 7 ermöglichen beim Verfahren der Energieführungskette 1 ein Abrollen des Obertrums 3 einerseits auf dem Untertrum 4, und ggf. darüber hinaus auf einer separaten Stützfläche 6, z.B. an einer Führungsrinne.

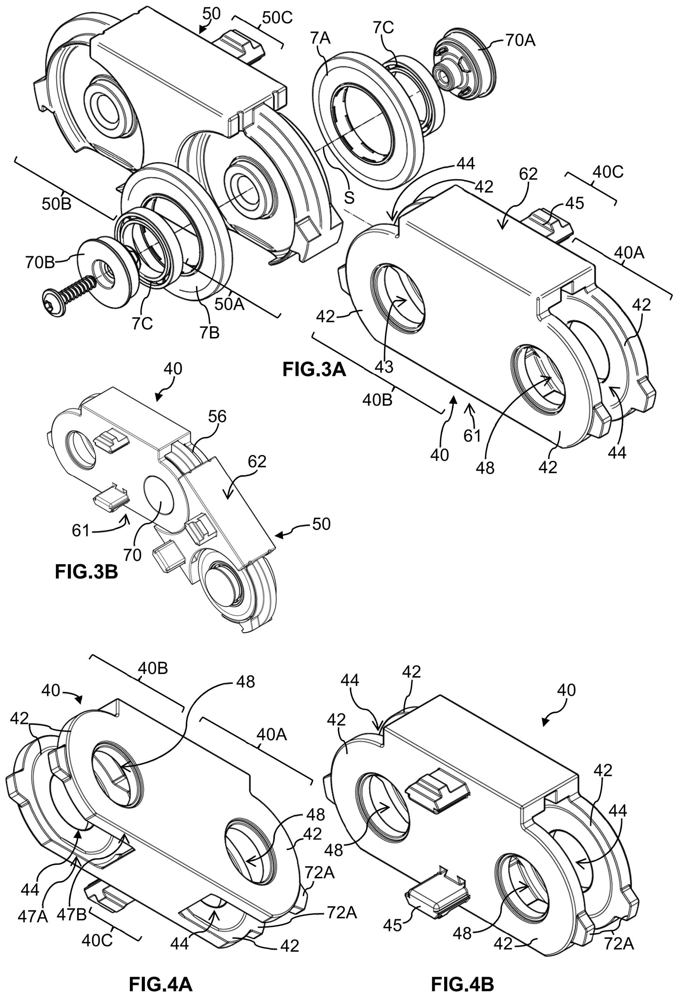

FIG.2A-2D zeigen ein Beispiel einer erfindungsgemäßen Energieführungskette 10 als Teilansicht in einer Betriebssituation, mit auf dem Untertrum 4 abrollendem Obertrum 3. Jedes der Kettenglieder 20 besteht aus entweder zwei seitlich gegenüberliegenden ersten Seitenteilen 40, oder zwei seitlich gegenüberliegenden zweiten Seitenteilen 50, die in Bezug auf FIG.3-7 näher erläutert werden. Im gezeigten Beispiel alternieren die ersten Seitenteile 40 mit den zweiten Seitenteilen 50 in Längsrichtung L. Die Seitenteile 40, 50 sind in Längsrichtung zu Strängen 11A, 11B miteinander gelenkig verbunden. Die Stränge 11A, 11B sind durch im Umlenkbogen innere Querstege 12A und äußere Querstege 12B verbunden. Ausgewählte oder alle Kettenglieder 20 weisen zum Abrollen der Trume 3, 4 integrierte Paare aus zwei Laufrollen 7A, 7B auf, die nur geringfügig über die Laufflächen bzw. inneren Schmalseiten vorstehen. Die Laufrollen 7A, 7B sind innenliegend geschützt in Aufnahmen in den Kettengliedern 20 angeordnet. Um ein Kollidieren bzw. Springen gegenüberliegender Laufrollen 7A, 7B beider Trume 3, 4 zu vermeiden, sind an den inneren Querstegen 12A der Kettenglieder 20 kammartige Führungselemente 14 angebracht, die beim Verfahren der Trume 3, 4 miteinander kämmen und einen seitlichen Versatz des Obertrums 3 gegenüber dem Untertrum 4 bewirken, sodass die Laufrollen 7A, 7B aneinander vorbei abrollen (FIG.2C-2D). Wie FIG.2A und FIG.2D veranschaulichen, besteht jeder der beiden Stränge 11A, 11B jeweils aus alternierend aufeinanderfolgenden ersten Seitenteilen 40 und zweiten Seitenteilen 50, die verschieden gestaltet sind.

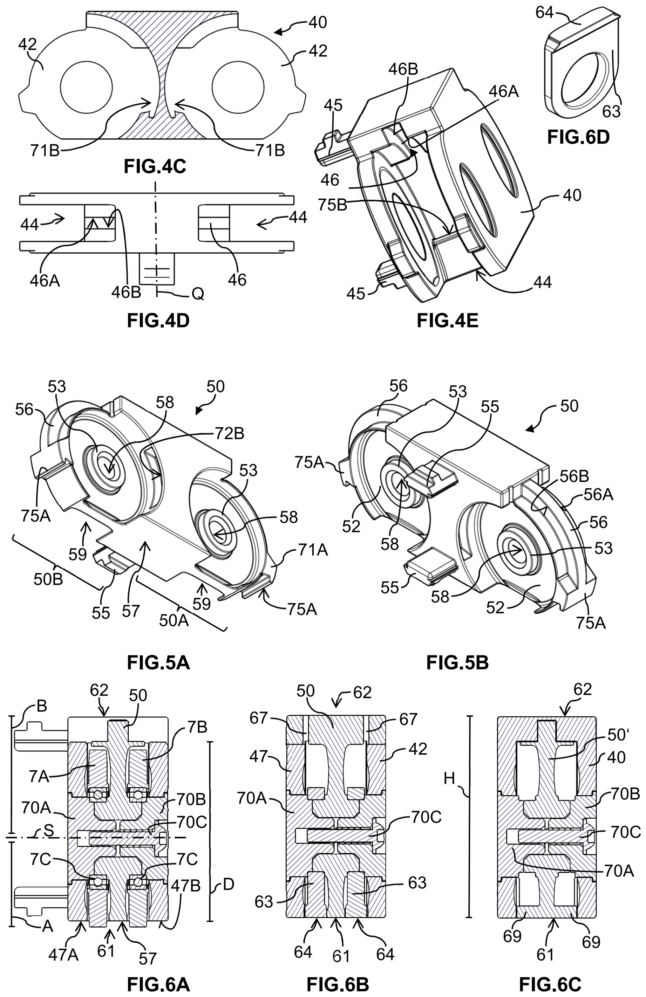

FIG.3A-3B, FIG.4A-4F und FIG.5A-5B veranschaulichen den Aufbau eines verbundenen Paars aus solchen Seitenteilen 40, 50 und deren unterschiedliche Gestaltung im Einzelnen. Zunächst zeigt FIG.3A, in Verbindung mit FIG.6A-6C, dass die Rotationsachse beider Laufrollen 7A, 7B jeweils mit der gemeinsamen Schwenkachse S eines Paars von Seitenteilen 40, 50 (FIG.3A-3B) koaxial übereinstimmt, sodass in Bezug auf die Gesamtbauhöhe H der Kettenglieder (FIG.6A-6C) sehr große Rollendurchmesser D nutzbar sind.

Die ersten Seitenteile 40 sind an beiden Längsenden bzw. doppelendseitig gabelartig ausgeführt, mit zwei in Längsrichtung L gegenüberliegenden Gabelbereichen 40A, 40B, die je ein Paar seitlich beabstandeter Seitenwände 42 aufweisen. Die Seitenwände 42 bilden dazwischen eine Laschenaufnahme 44, die in Längsrichtung weitgehend offen ist. Die Gabelbereiche 40A, 40B stehen in Längsrichtung gabelartig und in Draufsicht betrachtet etwa H-förmig von einem Mittenbereich 40C des Laschenkörpers ab. Das erste Seitenteil 40 ist insgesamt einteilig bzw. in einem Stück aus Kunststoff hergestellt, alternativ wäre eine zweiteilige Bauweise möglich zur Vereinfachung der Formwerkzeuge. An der dem Aufnahmeraum 13 zugewandten Seite kann der Mittenbereich 40C optionale, einteilig angeformte Befestigungsnasen 45 für die separaten Querstege 12A, 12B umfassen.

Das erste Seitenteil 40 ist vorteilhaft in Bezug auf eine Quermittelebene Q (FIG.4D) spiegelsymmetrisch ausgeführt, sodass es in beiden Strängen 11A, 11B verwendbar ist. Entsprechendes gilt auch für das zweite Seitenteil 50 aus FIG.3A-3B bzw. FIG.5A-5B.

Die zweiten Seitenteile 50, vgl. FIG.5A-5B, sind von den ersten Seitenteilen 40 verschieden gestaltet, insbesondere an beiden Längsenden laschenartig ausgeführt. Jedes Seitenteil 50 hat einen Körper mit zwei in Längsrichtung L gegenüberliegenden bzw. voneinander abgewandten Laschenbereichen 50A, 50B, die durch einen Mittenbereich 50C verbunden sind. Die Laschenbereiche 50A, 50B sind zum Eingriff und zur Verbindung mit den Gabelbereichen 40A, 40B der ersten Seitenteile 40 gestaltet und bestimmt, wie FIG.3A veranschaulicht. Die Seitenteile 50 sind ebenfalls bevorzugt jeweils einteilig als Kunststoff-Spritzgussteile hergestellt.

In den Laschenbereichen 50A, 50B sind beiderseits seitliche Vertiefungstaschen als Rollenaufnahmen vorgesehen, in welchen je eine der Laufrollen 7A, 7B aufgenommen wird, vgl. FIG.3A. Die Laschenbereiche 50A, 50B bilden schwertförmige Laschen 52, jeweils zum Eingriff in einen der Gabelbereiche 40A, 40B des komplementären ersten Seitenteils 40. Jeder Laschenbereich 50A, 50B hat beidseitig koaxial zu den Schwenkachsen S vorstehende Ringzapfen 53 für die Laufrollen 7A, 7B, auf welche z.B. Kugellager 7C für die Laufrollen 7A, 7B aufgepresst werden, vgl. FIG.6A-6C.

Wie FIG.6A-6C am besten zeigen, ist der Abstand A der Schwenkachse S zu der inneren Schmalseite 61 deutlich geringer als der Abstand B von der Schwenkachse S zu der äußeren Schmalseite 62. Die gezeigte Bauweise erlaubt zugleich die Verwendung von Laufrollen 7A, 7B mit vergleichsweise größerem Rollendurchmesser D als im Stand der Technik, hier z.B. mit D > 0,6H, insbesondere D > 0,75H.

Die Laufrollen 7A, 7B und Kugellager 7C werden mittels eines separaten Gelenkbolzens 70 an dem Seitenteil 50 befestigt. Der Gelenkbolzen 70 besteht aus zwei Bolzenteilen 70A, 70B, die miteinander verschraubt sind (FIG.6A-6C), z.B. Spritzgussteilen. Wie FIG.6A zeigt, werden die Kugellager 7C durch die Bolzenteile 70A, 70B kraftschlüssig auf je einem Ringzapfen 53 des Seitenteils 50 montiert. Zur Montage der Bolzenteile 70A, 70B sind im Seitenteil 40 in jeder Seitenwand 42 eine entsprechende kreisförmige Aufnahmeöffnung 48 vorgesehen. Das Seitenteil 50 hat in jedem Laschenbereiche 50A, 50B eine Aufnahmeöffnung 58 mit kleinerem Durchmesser zur Verbindung der Bolzenteile 70A, 70B, z.B. durch Schraubverbindung mittels Schraube 70C (vgl. FIG.6A-6C) durch die Ringzapfen 53 hindurch.

Durch den eingesetzten Gelenkbolzen 70 sind jeweils die beiden aufeinanderfolgenden Seitenteile 40, 50 relativ zueinander schwenkbar miteinander verbunden (vgl. FIG.3A bzw. FIG.6A-6C). Hierzu sind die beiden Seitenwände 42 mittels ihrer Aufnahmeöffnungen 48 des Gabelbereichs 40A, 40B um die Schwenkachse S schwenkbar am Gelenkbolzen 70 gelagert. Hierbei können Gelenkbolzen 70 bzw. dessen Bolzenteile 70A, 70B aus einem Kunststoff der vom Kunststoff der Seitenteile 40, 50 verschieden ist, z.B. ein Gleitlager-Kunststoff mit tribologischen Zusätzen, hergestellt sein.

Das erste Seitenteil 40 hat zwischen den Seitenwänden 42 jedes Gabelbereichs 40A, 40B jeweils eine zur Laschenaufnahme 44 hin offene Führungsnut 46, die seitlich gegenüberliegende Querführungsflächen 46A, 46B (FIG.4D-4E) aufweist, welche sich kreisbogenförmig um die Schwenkasche S erstrecken.

Der Laschenbereich 50A, 50B des komplementären Seitenteils 50 hat einen korrespondierenden Führungsvorsprung 56, der kreisbogenförmige Gegenflächen 56A, 56B (FIG.5B) zur Führung an den Querführungsflächen 46A, 46B aufweist, der in die Führungsnut 46 des ersten Seitenteils 40 eingreift. Im verbundenen Zustand (FIG.3B) wirken jeweils eine Führungsnut 46 und ein darin eingreifender Führungsvorsprung 56 über den gesamten Verschwenkwinkel zur Stabilisierung in Querrichtung zusammen.

Wie FIG.5A zeigt, sind an der unteren Schmalseite 61 des zweiten Seitenteils 50 jeweils unterseitige Öffnungen 59 vorgesehen, durch welche die montierten Laufrollen 7A, 7B zum Schlaufeninneren vorstehen können (vgl. FIG.6A). FIG.6B und FIG.6D zeigen separate Einsätze 63 mit Verschlussflächen 64 zum Verschließen der Öffnungen 59, wenn rollenlosen Paare verbundener Seitenteilpaare genutzt werden. Die Einsätze 63 können analog zu den Kugellagern 7C auf den Ringzapfen 53 befestigt werden. FIG.6C zeigt hierzu eine Alternative bzw. Variante 50' des zweiten Seitenteils, bei welchem anstelle der Öffnungen 59 (FIG.5A) Verschlussflächen 69 an den Laschenbereichen 50A, 50B an der unteren Schmalseite 61 mit im Spritzgussverfahren geformt sind, falls nicht alle Kettenglieder 20 Laufrollen 7A, 7B aufweisen sollen. FIG.6B zeigt weiterhin Auslaufnuten 67 zu den äußeren Schmalseiten 62, durch welche Flüssigkeit, z.B. Regen auf das Untertrum 4, aus dem Inneren ablaufen kann bzw. die zur Vermeidung von Staubansammlung vorteilhaft sind.

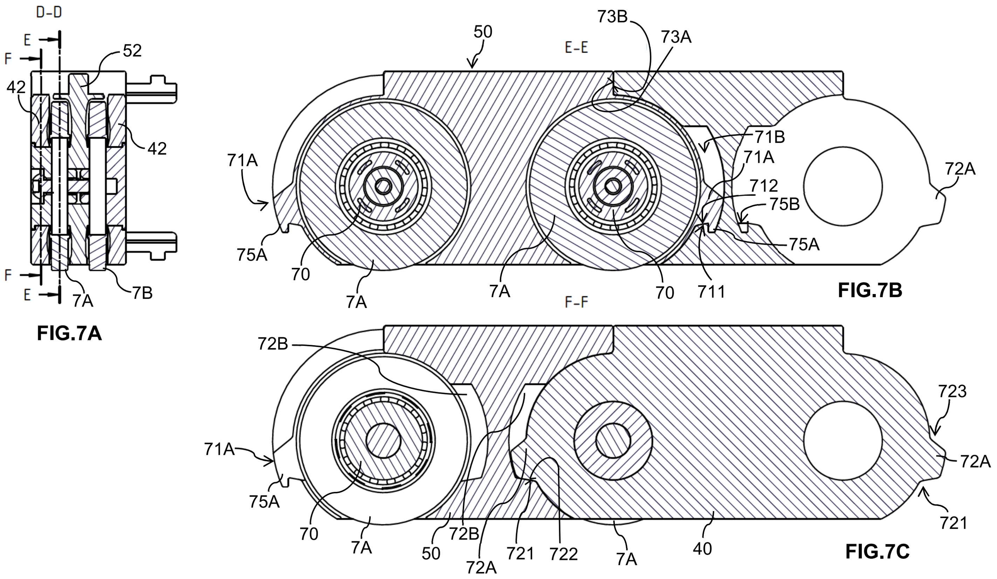

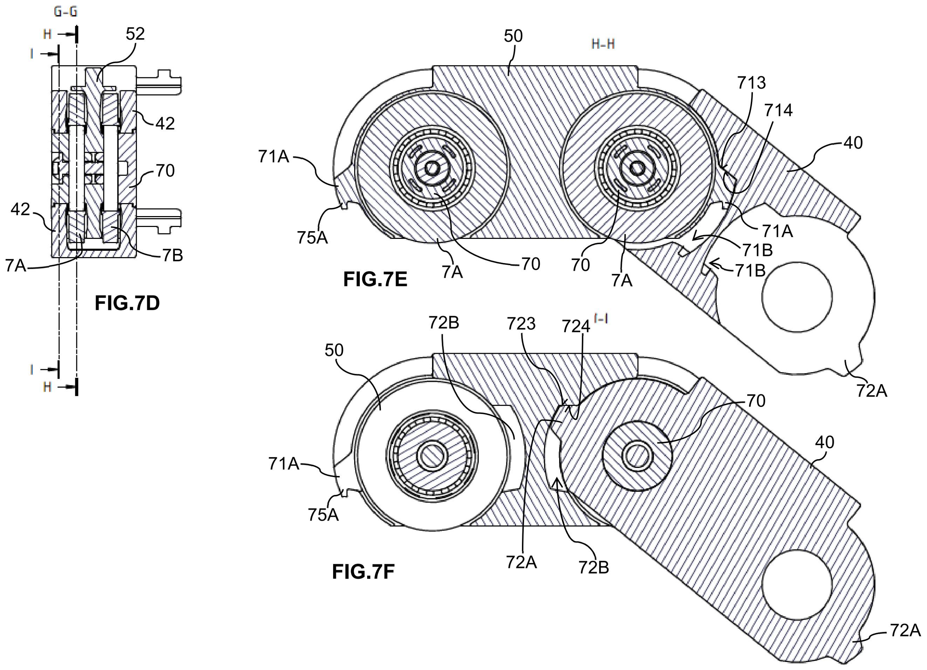

FIG.4A zeigt an der unteren Schmalseite des ersten Seitenteils 40 zwei in Längsrichtung L durchgehende, ebene Laufflächenabschnitte 47A, 47AB, die von den Seitenwänden 42 bzw. dem Mittenbereich 40C gebildet sind. FIG.5A zeigt einen in Längsrichtung L ebenen und durchgehenden, hier zentralen Laufflächenabschnitt 57, der von den Laschen 52 und dem Mittenbereich 50C des zweiten Seitenteils 50 an der inneren Schmalseite gebildet wird. Auf einem der Laufflächenabschnitte 47A, 47B bzw. 57 kann je eine der Laufrollen 7A, 7B seitlich versetzt abrollen. Die Breite der Laufflächenabschnitte 47A, 47B bzw. 57 in Querrichtung entspricht im Wesentlichen der Rollenlaufbreite (vgl. FIG.6A). Die asymmetrische exzentrische Gestaltung der Seitenteile 40, 50 in Höhenrichtung bzw. asymmetrische Gestaltung bzgl. der Abstände A, B erlaubt technisch minimale Spalte im Übergang zwischen den Laufflächenabschnitten 47A, 47B bzw. 57 in Strecklage der Trume 3, 4 (vgl. FIG.7C). Dadurch kann die dem anderen Trum zugewandte, d.h. innere Schmalseite in gestreckter Konfiguration (FIG.7A-7C) eine im wesentlichen durchgehende Lauffläche 47A, 47B bzw. 57 bilden, auf welcher das andere Trum mit seinen Laufrollen 7A, 7B besonders vibrationsarm und verschleißfrei abrollen.

Anhand von FIG.7A-7F wird nachfolgend die Begrenzung der relativen Verschwenkung von zwei gelenkig verbundenen Kettengliedern 20, hier aus Seitenlaschen 40, 50 des ersten Ausführungsbeispiels, beschrieben.

FIG.7A-7C veranschaulichen die Anschlagfunktionen in der Strecklage verbundener Seitenteile 40, 50. Bei dem in FIG.7A-7C dargestellten Paar aus Seitenteilen 40, 50 haben beide verbundenen Seitenteile 40, 50 mindestens drei um die Schwenkachse S, die durch den Schwenkbolzen 70 definiert ist, verteilt angeordnete Paare zusammenwirkender Streckanschlagflächen. Ein Streck-Anschlagpaar wird gebildet durch jeweilige Stirnflächen 73A, 73B, die in Strecklage im Anschlag stehen, als Anschlag- und Gegenanschlagflächen. Die Stirnflächen 73A, 73B liegen jeweils senkrecht zur Längsrichtung in Strecklage und etwa vertikal oberhalb der Schwenkachse S (FIG.7B). Ein zweites Streck-Anschlagpaar wird gebildet durch einen ersten Anschlagvorsprung 71A am zweiten Seitenteil 50, welcher in eine Anschlagtasche 71B des ersten Seitenteils 40 eingreift. Zusammenwirkend sind als Anschlagflächen jeweils eine erste Anschlagfläche 711 am Anschlagvorsprung 71A, welche mit einer ersten Gegenanschlagfläche 712 der Anschlagtasche 71B im Anschlag liegt, in der Strecklage. Als drittes Anschlagpaar ist an jeder Seitenwand 42 des ersten Seitenteils 40 jeweils ein zweiter Anschlagvorsprung 72A vorgesehen, welcher in eine entsprechende von zwei Anschlagtaschen 72B des zweiten Seitenteils 50 eingreift, wie näher in FIG.7C gezeigt. In Strecklage liegen hierbei eine erste Anschlagfläche 721 am Anschlagvorsprung 72A mit einer ersten Gegenanschlagfläche 722 der Anschlagtasche 72B im Anschlag (FIG.7C). Die Anordnung von Taschen und Vorsprüngen kann in Bezug auf die Seitenteile 40, 50 auch umgekehrt sein. Das Eingreifen von Anschlagvorsprüngen 72A in Anschlagtaschen 72B bietet zusätzliche Seitenstabilität, hier insbesondere in jeder Schwenkstellung.

Wie FIG.7B-7C zeigen, sind die Anschlagflächen der drei Anschlagpaare 71A-71B, 72A-72B, 73A-73B winkelmäßig näherungsweise gleichverteilt um die Schwenkachse S angeordnet, hier mit einem Winkelabstand von etwa 120°, dies ist jedoch nicht zwingend. Durch mehrere Streck-Anschlagpaare 71A-71B, 72A-72B, 73A-73B wird eine große Gesamtfläche erzielt und u.a. der Gelenkbolzen 70 zumindest teilweise entlastet gegen Kräfte, die in der Strecklage bzw. insbesondere im durchhängenden Übergang vom Umlenkbogens 5 hin zum abrollenden geraden Trum auftreten. In FIG.7A-7C nicht erkennbar dargestellt ist eine mögliche Vorspannung der Stränge bzw. Seitenteile 40, 50 in Strecklage durch entsprechende Anordnung der Anschläge.

Wie FIG.7B weiterhin zeigt, ist der erste Anschlagvorsprung 71A, hier z.B. am zweiten Seitenteil 50, hakenförmig gestaltet und hintergreift in das andere, hier erste Seitenteil 40. Jeder der beiden ersten Anschlagvorsprünge 71A bildet dabei einen Zughaken 75A welcher, in gestreckter Schwenkstellung (Strecklage), zwecks Zugkraftübertragung in eine korrespondierende Aussparung 75B am anderen Seitenteil 40 eingreift. Durch diese - für sich genommen als erfindungserhebliche - Gestaltung kann, ganz allgemein bei jeglicher Art Energieführungskette, eine vorteilhafte Zugkraft-Entlastung der Gelenkverbindung zwischen den Kettengliedern erzielt werden. Diese Gestaltung mit Zughaken 75A und zusammenwirkender Aussparung 75B am verbundenen Seitenteil 40, 50 ist jedoch besonders bei sehr langen Energieführungskette bzw. Fahrwegen vorteilhaft.

Wie FIG.5A am besten zeigt, erstreckt sich der hakenförmige Vorsprung zur Zugkraftübertragung bzw. Zughaken 75A vorzugsweise in Querrichtung über die gesamte Maximalbreite des Laschenbereichs 52 des Seitenteils 50, d.h. über die maximal mögliche Breite, was vorteilhafte Kraftübertragung bzw. Belastbarkeit erzielt. Entsprechend ist die Aussparung 75B am anderen Seitenteil 40 über die gesamte Breite der Laschenaufnahme 44 erstreckt (vgl. FIG.4E).

FIG.7D-7F veranschaulichen die Anschlagfunktionen in der vollständig abgewinkelten Lage verbundener Seitenteile 40, 50, wenn diese sich im Umlenkbogen 5 (FIG.1) befinden. Hierbei stehen jeweils eine zweite Anschlagfläche 713 am Anschlagvorsprung 71A, mit einer zweiten Gegenanschlagfläche 714 der Anschlagtasche 71B im Anschlag und zugleich an jeder Seitenwand 42 jeweils eine zweite Anschlagfläche 723 am Anschlagvorsprung 72A, mit einer zweiten Gegenanschlagfläche 724 der Anschlagtasche 72B im Anschlag. Die Lage dieser Flächen, d.h. Geometrie der beiden Anschlagpaare 71A-71B, 72A-72B bestimmt den maximalen Schwenkwinkel zwischen beiden Seitenteilen 40, 50 und somit den Radius des Umlenkbogens 5.

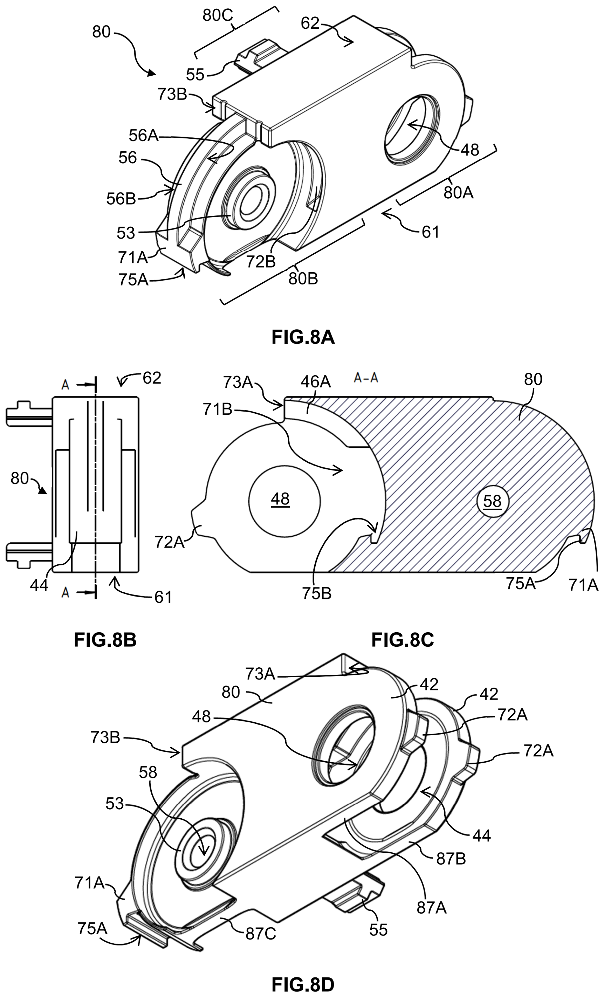

FIG.8A-8D zeigen eine zweite alternative Ausführungsform der Erfindung, bei welchem die Stränge aus aufeinanderfolgenden identischen Seitenteilen 80 aufgebaut werden, die als einseitige Gabellaschen bzw. Y-Gabellasche ausgeführt sind.

Das Seitenteil 80 hat, entsprechend der Bauweise der Gabelbereiche 40A, 40B der ersten Seitenteilen 40 aus FIG.2-7, an einem Ende einen Gabelbereich 80A, der ein Paar seitlich beabstandete Seitenwände 42 aufweist, mit einer Laschenaufnahme 44 dazwischen. Am anderen Ende hat das Seitenteil 80 einen Laschenbereich 80B, entsprechend der Bauweise der Laschenbereiche 50A, 50B der zweiten Seitenteilen 50 aus FIG.2-7.

Somit kann der Laschenbereich 80B in die Laschenaufnahme 44 einer in Längsrichtung folgenden Seitenteils 80 eingreifen und in der oben beschrieben Weise mittels eines Gelenkbolzen 70 (nicht gezeigt) mit diesem schwenkbar verbunden werden. Ebenfalls nicht gezeigt sind die Laufrollen 7A, 7B wobei der Aufbau bzw. die Bauweise im Querschnitt jedoch den FIG.6A-6C entsprechen kann.

Das Seitenteil 80 hat insbesondere auch durchgehende Laufflächenabschnitte 87A, 87B, 87C, sowie drei um die Schwenkachse verteilt angeordnete Paare 71A-71B; 72A-72B; 73A-73B zusammenwirkender Anschlagflächen, welche bei gestreckter Schwenkstellung verbundener Seitenteile 80 in Anschlag stehen und winkelmäßig näherungsweise gleichverteilt um die Schwenkachse S angeordnet sind.

Weiterhin hat das Seitenteil 80 ebenfalls vorteilhaft einen Zughaken 75A, welcher in gestreckter Schwenkstellung verbundener Seitenteile 80 zwecks Zugkraftübertragung in eine Aussparung 75B am anderen Seitenteil 80 greifen kann, wie aus FIG.8C erkennbar.

Weitere mit entsprechenden Bezugszeichen versehene Merkmale in FIG.8A-8D entsprechen denen, die zu FIG.2-7 bereits beschrieben wurden und werden zur Verkürzung nicht wiederholt beschrieben.

FIG.8A-8D zeigt somit ein alternatives Seitenteil 80, dessen Bauweise einen Laschenbereich 80B, ähnlich oder identisch zum Laschenbereich 50A, 50B des Seitenteils 50, und gegenüberliegend einen Gabelbereich 80A, ähnlich oder identisch zu den Gabelbereichen 40A, 40B hat. Das Seitenteil 80 ist somit nicht spiegelsymmetrisch zur Querebene Q, wobei dennoch in jedem der Stränge 11A, 11B ggf. jeweils die gleichen Seitenteile 80 verwendet werden können.

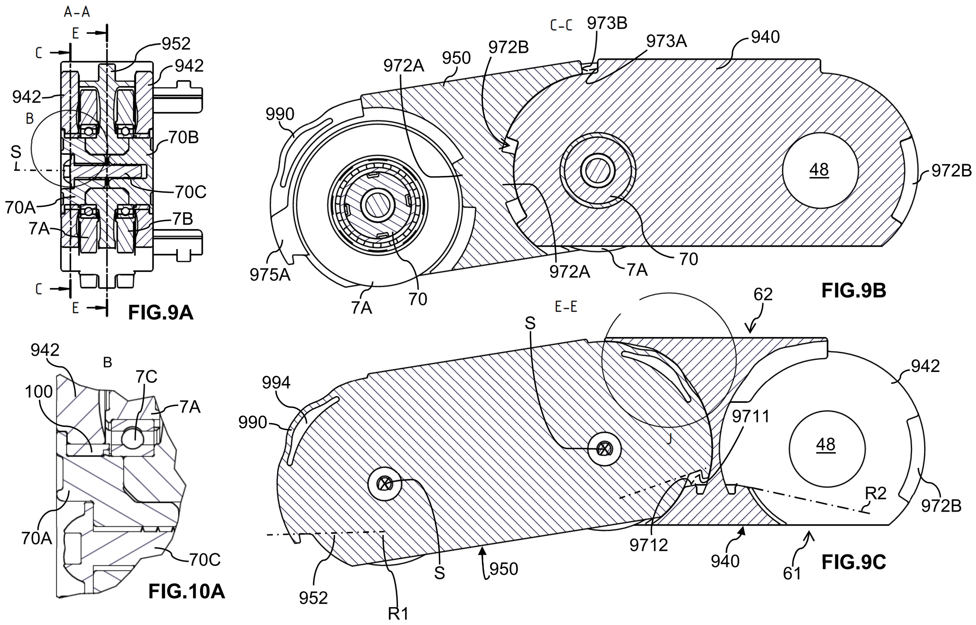

FIG.9A-9G zeigen eine weiterentwickelte Ausführungsform, nämlich eine Abwandlung bzw. Variante des ersten Beispiels aus FIG.3-7, mit verschiedenen, nämlich ersten Seitenteilen 940 und zweiten Seitenteilen 950. Zur Verkürzung werden nur die wesentlichen Unterschiede zum Beispiel FIG.3-7 näher erläutert, wobei entsprechende Bezugszeichen in FIG.9A-9G entsprechende Merkmale aus FIG.3-7 bezeichnen.

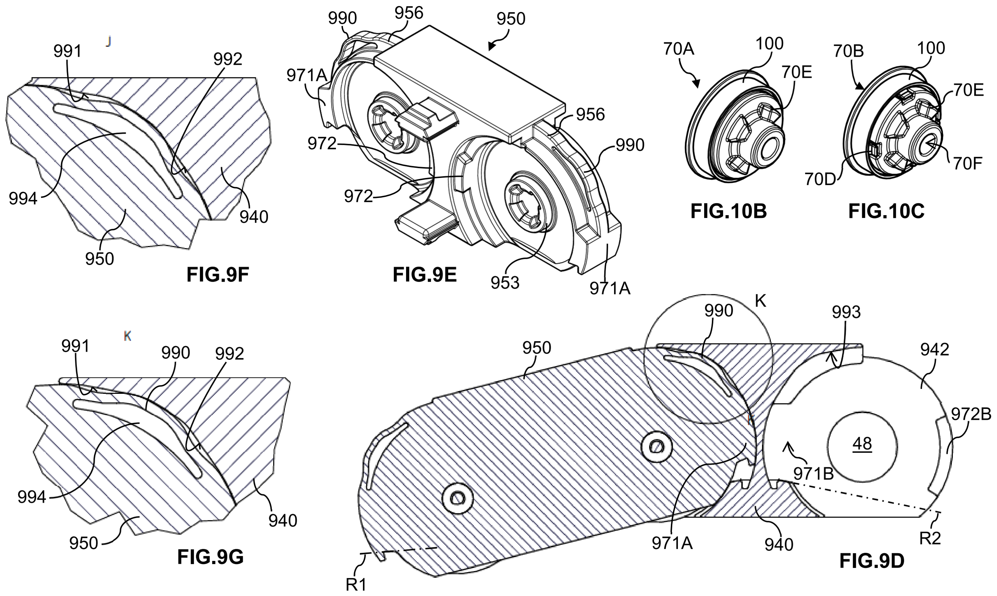

Ein erster Unterschied betrifft das Anschlagsystem mit den Paaren von Anschlägen 971A-971B, 972A-972B, 973A-973B mit zusammenwirkenden Anschlagflächen. Das Anschlagsystem des dritten Ausführungsbeispiels unterscheidet sich hauptsächlich durch Vertauschung der Anordnung von Anschlagvorsprung 972A am zweiten Seitenteil 950 und der Anschlagtasche 972B innenseitig an den Stirnseiten der Seitenwände 942 bzw. der Gabelbereiche des ersten Seitenteils 950. Die Geometrische Anordnung der Anschlagflächen ist ansonsten weitgehend identisch zu FIG.3-7, inkl. der Nutzung eines Zughakens 975A und einer korrespondierenden Aussparung 975B. Ein Vorteil der Anordnung der Anschlagvorsprünge 972A am zweiten Seitenteil 950 und der Anschlagtaschen 972B jeweils innenseitig an den Stirnseiten der Seitenwände 942 besteht in der Vereinfachung des Werkzeugs zur Spritzgussherstellung. Eine Gemeinsamkeit zu FIG.3-7 besteht darin, dass die in Bezug auf die neutrale Faser zur inneren Schmalseite 61 hin angeordneten ersten Anschlagflächen 9711 des Anschlagvorsprungs 971A und ersten Gegenanschlagflächen 9712 der Anschlagtasche 971B auch im Beispiel aus FIG.9A-9E, wie in FIG.3-7, eine besondere Ausrichtung haben. Zur Erzielung einer Art Keilwirkung im Streckanschlag bzw. vorgespannter Stellung (hier nicht gezeigt, vgl. FIG.7B), sind die ersten Anschlagflächen 9711 und ersten Gegenanschlagflächen 9712 nicht radial zur Schwenkachse S ausgerichtet, sondern bilden einen Winkel zu einem entsprechenden Radius, nämlich dergestalt, dass diese Flächen zu einer Vertikalen durch die Schwenkachse S hin abfallend in Richtung der inneren Schmalseite 61 angeordnet sind, wie durch die Richtungslinien R1, R2 veranschaulicht in FIG.9C bzw. FIG.9D. Dies bewirkt einen verbesserten Kraftfluss bzw. u.a. eine verbesserte Wirkung des Zughakens 975A, zur Entlastung der Gelenkbolzen 70.

Ein zweiter Unterschied ist eine zusätzlich vorgesehene Anschlagdämpfung. Hierzu ist als Dämpfungsmittel eine bogenförmige Dämpfungsbrücke 990 vorgesehen, welche in radialer Richtung in Bezug auf die Schwenkachse S vom Führungsvorsprung 956 am zweiten Seitenteil 950 im Führungsvorsprung 956 vorsteht und über den äußeren Radius des Führungsvorsprungs 956 radial herausragt (FIG.9C). Die Dämpfungsbrücke 990 ist einteilig mit dem Führungsvorsprung 956 am Seitenteil 950 vorgesehen. Zur Verformbarkeit der Dämpfungsbrücke 990 ist im Führungsvorsprung 956 eine Aussparung bzw. einen Durchbruch 994 vorgesehen, der einen Freiraum bildet in welchem die Dämpfungsbrücke 990 bei Verformung ausweichen kann.

Wie am besten aus FIG.9F-9G ersichtlich, wirkt die Dämpfungsbrücke 990 mit einer korrespondierenden Vertiefung 993 im anderen Seitenteil 940 zusammen. Die Vertiefung 993 ist in oder an der Führungsnut 946 vorgesehen. In einem mittleren Bereich der Vertiefung 993 ist die Dämpfungsbrücke 990 über einen gewünschten Schwenkbereich unverformt beweglich bzw. frei verschwenkbar, vgl. FIG.9C i.V.m. FIG.9G.

Wie näher in FIG.9F-9G gezeigt ist die Vertiefung 993 so geformt, dass der Körper des ersten Seitenteils schräge oder gekrümmte Anlaufflächen 991, 992 in Art von Auflaufschrägen für die Dämpfungsbrücke 990 bildet. Dämpfungsbrücke 990 und Vertiefung 993 sind symmetrisch ausgeführt, sodass die Dämpfungsbrücke 990 in beide Schwenkrichtungen, d.h. in Richtung Strecklage (hier nicht gezeigt: vgl. FIG.7B-7C) und in Richtung vollständig abgewinkelter Relativstellung (hier nicht gezeigt: vgl. FIG.7E-7F) der Seitenteile 940, 950 wirksam ist. Die Dämpfungsbrücke 990 wird vor Erreichen der voll gestreckten bzw. voll abgewinkelten Stellung gegen die Anlaufflächen 991, 992 gedrückt und biegeelastisch verformt. Hierdurch wird die Schwenkbewegung gebremst bzw. gedämpft. Die Gestaltung ist so gewählt, dass Dämpfung der Schwenkbewegung nur im Endbereich der Schwenkbewegung, z.B. bei ca. 5° Winkelmaß vor Erreichen der beiden Anschlagpositionen (vgl. FIG.7A-7F) eintritt.

FIG.10A-10C zeigen eine weitere mögliche Verbesserung, die auf alle Ausführungsbeispiele optional anwendbar ist. Mit den Bolzenteilen 70A, 70B können Gleitlagerbuchsen bzw. -ringe 100 zusammenwirken und montiert werden, welche eine günstige Materialpaarung mit den Bolzenteilen 70A, 70B bzw. günstigere Materialauswahl der Bolzenteilen 70A, 70B ermöglichen um die Lebensdauer zu erhöhen. Ein Gleitlagerring 100 aus einem tribologisch optimierten Werkstoff, z.B. einem Tribopolymer, kann wie in FIG.9A bzw. FIG.10A gezeigt an jedem Bolzenteil 70A, 70B vorgesehen werden. Die Gleitlagerringe 100 verbessern die schwenkbare Lagerung (in Art einer Bolzen-/Bohrungslagerung) der Seitenwände 42 bzw. ihrer Aufnahmeöffnungen 48 an den Gelenkbolzen 70. Dazu ist jeder Gleitlagerring 100 drehbar am Gelenkbolzen 70 angeordnet, z.B. durch Rastelemente 70D gehalten und nach Befestigung der Bolzenteile 70A, 70B mittels einer Schneidschraube 70C (FIG.9A) drehfest an der jeweiligen Seitenwand 42 befestigt, sodass die Relativdrehung nicht zwischen dem Rand der Aufnahmeöffnungen 48 und den Gelenkbolzen 70, sondern zwischen Gleitlagerring 100 und Gelenkbolzen 70 erfolgt. Anhand der Bolzenteile 70A, 70B können Gleitlagerringe 100 mit leichtem Übermaß einfach in die Aufnahmeöffnungen 48 eingepresst bzw. eingepasst werden.

FIG.10A-10B veranschaulichen gemeinsam mit FIG.9E schließlich noch eine einfache Gestaltung zur drehfesten Montage der Bolzenteile 70A, 70B an den Ringzapfen 953 der Seitenteile 950. Hierzu können Nasen 70E formschlüssig mit korrespondierenden Vertiefungen in den Ringzapfen 953 zusammenwirken. Dadurch ist zugleich bei der Montage eine Verdrehsicherung des Bolzenteils 70B mit Kernloch 70F für die Schneidschraube 70C erzielt.

### Bezugszeichenliste / Legende

FIG.1
   - 1: Energieführungskette
   - 2: Kettenglied
   - 3: Obertrum
   - 4: Untertrum
   - 5: Umlenkbogen
   - 6: Stützfläche
   - 7: Laufrollen
FIG.2A-2D u. FIG.3A-FIG.6C
   7A, 7B Laufrollen
   7C Kugellager
   10 Energieführungskette
   11A, 11B Strang
   12A, 12B Quersteg
   13 Aufnahmeraum (für Leitungen)
   14 kammartige Führungselemente
   20 Kettenglied
   40 Seitenteil (erster Typ)
   40A, 40B Gabelbereich
   40C Mittenbereich
   42 Seitenwand
   44 Laschenaufnahme
   45, 55 Befestigungsnase
   46 Führungsnut
   46A, 46B Querführungsflächen
   47A, 47B Laufflächenabschnitt
   48 Aufnahmeöffnung (für Bolzenteil)
   50 Seitenteil (zweiter Typ)
   50A, 50B Laschenbereich
   50C Mittenbereich
   52 Lasche
   53 Ringzapfen
   56 Führungsvorsprung
   56A, 56B Gegenfläche
   57 Laufflächenabschnitt
   58 Aufnahmeöffnung (für Bolzenteil)
   59 Öffnung (für Laufrolle)
   61 innere Schmalseite
   62 äußere Schmalseite
   63 Einsatz
   64, 69 Verschlussfläche
   67 Auslaufnut
   70 Gelenkbolzen
   70A, 70B Bolzenteil
   70C Schraube
   A Abstand zur Innenseite
   B Abstand zur Außenseite
   D Rollendurchmesser
   L Längsrichtung
   S Schwenkachse
   Q Quermittelebene
FIG.7A-7F
   70C Schraube
   71A Anschlagvorsprung
   71B Anschlagtasche
   72A Anschlagvorsprung
   72B Anschlagtasche
   73A, 73B Anschlagpaar bzw. Stirnflächen
   75A Zughaken
   75B Aussparung (für Zughaken)
   711, 721 erste Anschlagfläche
   712, 722 erste Gegenanschlagfläche
   713, 723 zweite Anschlagfläche
   714, 724 zweite Gegenanschlagfläche
FIG.8A-8D:
   80 Seitenteil
   80A Gabelbereich (=40A, 40B)
   80B Laschenbereich (=50A, 50B)
   87A, 87B, 87C Laufflächenabschnitte
FIG.9A-9G:
   7A, 7B Laufrolle
   48 Aufnahmeöffnung
   61, 62 Schmalseite
   940 Seitenteil (erster Typ)
   942 Seitenwand
   950 Seitenteil (zweiter Typ)
   956 Führungsvorsprung
   971A-971B, 972A-972B, 973A-973B Anschläge
   975A Zughaken
   975B Aussparung (für Zughaken)
   9711 erste Anschlagfläche (Ausrichtung R1)
   9712 erste Gegenanschlagfläche (Ausrichtung R2)
   990 Dämpfungsbrücke
   991, 992 Anlaufflächen (für Dämpfungsbrücke)
   993 Vertiefung (für Dämpfungsbrücke)
   994 Durchbruch/Aussparung
   S Schwenkachse
FIG.10A-10C (u. FIG.9A)
   7A Laufrolle
   7C Kugellager
   70 Gelenkbolzen
   70A, 70B Bolzenteil
   70C Schneidschraube
   70D Rastelement
   70E Kernloch
   100 Gleitlagerring
   S Schwenkachse

### Ausführungsformen (aus Stammanmeldung EP21845088.0):

In der Stammanmeldung mit Anm. Nr. EP21845088.0 (EP4259951), welche der vorliegenden Teilanmeldung zugrunde liegt, wurden insbesondere folgende Gegenstände bzw. Ausführungsformen offenbart und bei Einreichung (PCT/IB2021/000853) ursprünglich beansprucht:
1. Energieführungskette (10) zur Führung von Leitungen, wie z.B. Kabeln, Schläuchen oder dergleichen,
   mit einer Anzahl gelenkig miteinander verbundener Kettenglieder (20), die zueinander parallele Seitenteile (40, 50; 80) umfassen, die in Längsrichtung zu zwei Strängen (11A, 11B) verbunden sind, welche durch Querstege (12A, 12B) miteinander verbunden sind;
   wobei zwei in Längsrichtung (L) benachbarte Seitenteile jeweils um eine gemeinsame Schwenkachse (S) gegeneinander verschwenkbar sind, und die Energieführungskette so verfahrbar ist, dass sie ein Obertrum (3), ein Untertrum (4) und einen beide Trume verbindenden Umlenkbereich (5) bildet, wobei das Obertrum (3) insbesondere auf dem Untertrum (4) verfahrbar ist; und
   mit Laufrollen (7A, 7B) an zumindest einigen Kettengliedern zum abrollenden Verfahren der Energieführungskette, insbesondere auf Kettengliedern des gegenüberliegenden Trums, wobei die Rotationsachse einer Laufrolle jeweils mit der gemeinsamen Schwenkachse (S) eines Paars von Seitenteilen zusammenfällt; **dadurch gekennzeichnet,**
      - dass jeder der beiden Stränge (11A, 11B) aus alternierend aufeinanderfolgenden ersten und zweiten Seitenteilen (40, 50) besteht, wobei die ersten Seitenteile (40) gabelartig ausgeführt sind mit zwei in Längsrichtung gegenüberliegenden Gabelbereichen (40A, 40B), die je ein Paar seitlich beabstandeter Seitenwände (42) mit einer Laschenaufnahme (44) dazwischen aufweisen, und wobei die zweiten Seitenteile (50) laschenartig ausgeführt sind mit zwei in Längsrichtung gegenüberliegenden Laschenbereichen (50A, 50B), welche jeweils in eine Laschenaufnahme (44) eines benachbarten ersten Seitenteils (40) eingreifen;
         oder
      - dass jeder der beiden Stränge (11A, 11B) aus aufeinanderfolgenden als Gabellaschen ausgeführten Seitenteilen (80) besteht, wobei jede Gabellasche (80) jeweils in Längsrichtung (L) gegenüberliegend einen Gabelbereich (80A), der ein Paar seitlich beabstandeter Seitenwände (42) mit einer Laschenaufnahme (44) dazwischen aufweist, und einen Laschenbereich (80B) umfasst, welcher in eine Laschenaufnahme (44) eines benachbarten Seitenteils (80) eingreift.
2. Energieführungskette nach Gegenstand 1, wobei die Seitenteile (40, 50; 80) jeweils eine dem jeweils anderen Trum zugewandte innere Schmalseite (61) und eine abgewandte äußere Schmalseite (62) aufweisen,
   dadurch gekennzeichnet, dass der Abstand (A) der Schwenkachse (S) zu der inneren Schmalseite (61) geringer ist als der Abstand (B) der Schwenkachse (S) zu der äußeren Schmalseite (62), und dass vorzugsweise die dem anderen Trum zugewandten Schmalseiten (61) in gestreckter Konfiguration eine im wesentlichen durchgehende Lauffläche (47A, 47B, 57; 87A, 87B, 87C) bilden, auf welcher das gegenüberliegende Trum abrollen kann.
3. Energieführungskette nach Gegenstand 1 oder 2, dadurch gekennzeichnet, dass die Seitenteile (40, 50; 80) einteilig aus Kunststoff hergestellt sind, vorzugsweise als Spritzgussteile.
4. Energieführungskette nach einem der Gegenstände 1 bis 3, dadurch gekennzeichnet, dass, in Bezug auf ein verbundenes Seitenteilpaar, ein Seitenteil (40; 80) zwischen den Seitenwänden (42) des Gabelbereichs eine zur Laschenaufnahme (44) hin offene Führungsnut (46) bildet, die seitlich gegenüberliegende Querführungsflächen (46A, 46B) aufweist, welche sich kreisbogenförmig um die Schwenkasche (S) erstrecken, und dass der Laschenbereich (50A, 50B) des verbundenen Seitenteils (50; 80) mit mindestens einem Führungsvorsprung (56), der kreisbogenförmige Gegenflächen (56A, 56B) zur Führung an den Querführungsflächen (46A, 46B) aufweist, in die Führungsnut (46) des anderen Seitenteils (40; 80) eingreift, wobei Führungsnut (46) und Führungsvorsprung (56) vorzugsweise mittig zur Längsmittelebene der Seitenteile und/oder zwischen den Laufrollen (7A, 7C) angeordnet sind.
5. Energieführungskette nach einem der Gegenstände 1 bis 4, dadurch gekennzeichnet, dass, in Bezug auf ein verbundenes Seitenteilpaar, beide verbundenen Seitenteile mindestens drei um die Schwenkachse verteilt angeordnete Paare (71A-71B; 72A-72B; 73A-73B) mit zusammenwirkenden Anschlagflächen aufweisen, welche in gestreckter Schwenkstellung beider Seitenteile (40, 50; 80) in Anschlag stehen und vorzugsweise winkelmäßig näherungsweise gleichverteilt um die Schwenkachse angeordnet sind.
6. Energieführungskette, insbesondere nach einem der Gegenstände 1 bis 5, dadurch gekennzeichnet, dass, in Bezug auf ein verbundenes Seitenteilpaar, ein Seitenteil (50; 80) einen Zughaken (75A) aufweist welcher, in gestreckter Schwenkstellung beider Seitenteile, zwecks Zugkraftübertragung in eine Aussparung (75B) am anderen Seitenteil (40, 80) greift.
7. Energieführungskette nach einem der Gegenstände 1 bis 6, dadurch gekennzeichnet, dass die Laufrollen (7A, 7B) jeweils in Aufnahmen zwischen den benachbarten Seitenteilen (40, 50; 80) aufgenommen sind und über deren Schmalseite (61) teilweise bzw. nur geringfügig vorstehen, wobei vorzugsweise jede Laufrolle (7A, 7B) jeweils zwischen einer Seitenwand (42) eines Gabelbereichs (40A, 40B; 80A) und einem in diesen eingreifenden Laschenbereich (50A, 50B; 80B) angeordnet ist, wobei besonders bevorzugt an rollentragenden Seitenteilpaaren jeweils zwei Laufrollen (7A, 7B) beidseitig des Laschenbereichs (50A, 50B; 80B) in der Laschenaufnahme vorgesehen sind.
8. Energieführungskette nach Gegenstand 7, dadurch gekennzeichnet, dass an der dem jeweils anderen Trum zugewandte Schmalseite (61) der Seitenteile mindestens eine Seitenwand (42) des Gabelbereichs und des Laschenbereichs (52) jeweils einen Abschnitt (47A, 47B, 57; 87A, 87B, 87C) der Lauffläche für eine von zwei Laufrollen bilden.
9. Energieführungskette nach einem der vorstehenden Gegenstände, dadurch gekennzeichnet, dass die bzw. alle Seitenteile (40, 50; 80) in jedem Strang jeweils durch einen separaten Gelenkbolzen (70) miteinander verbunden sind.
10. Energieführungskette nach Gegenstand 9, dadurch gekennzeichnet, dass die beiden Seitenwände (42) jedes Gabelbereichs (40A, 40B; 80A) und der Laschenbereich (50A, 50B; 80B) jeweils eine durchgehende Aufnahmeöffnung (48; 58) für einen separaten Gelenkbolzen (70) aufweisen und durch einen eingesetzten Gelenkbolzen relativschwenkbar miteinander verbunden sind, wobei der Gelenkbolzen vorzugsweise zwei Bolzenteile (70A, 70B) umfasst, welche durch eine, insbesondere genau eine, Schraube (70C), vorzugsweise Schneidschaube (70C) miteinander verschraubt sind.
11. Energieführungskette nach Gegenstand 9 oder 10, dadurch gekennzeichnet,
   - dass zumindest ein Bolzenteil (70A, 70B) des separaten Gelenkbolzens (70) drehfest mit dem Laschenbereich (50A, 50B; 80B) verbunden ist, insbesondere durch Formschluss, und/oder die beiden Seitenwände (42) mittels ihrer Aufnahmeöffnungen (48) des Gabelbereichs um die Schwenkachse (S) schwenkbar am separaten Gelenkbolzen (70) gelagert sind; und/oder
   - dass die Laufrollen (7A, 7B) jeweils am Gelenkbolzen (70) drehbar gelagert sind, vorzugsweise durch ein Kugellager (7C).
12. Energieführungskette nach Gegenstand 9 oder 10, dadurch gekennzeichnet, dass am Gelenkbolzen (70) jeweils ein Gleitlagerring (100) zur schwenkbaren Lagerung der Seitenwände (42) vorgesehen ist, wobei der Gleitlagerring insbesondere drehbar am Gelenkbolzen (70) angeordnet und drehfest an einer Seitenwand (42) befestigt ist.
13. Energieführungskette nach einem der vorstehenden Gegenstände, dadurch gekennzeichnet, dass in beiden Strängen (11A, 11B) baugleiche Seitenteile (40, 50) vorgesehen sind, insbesondere jeweils identische gabelartige erste Seitenteile (40) und identische laschenartige zweite Seitenteile (50), wobei die ersten und zweiten Seitenteile (40; 50) vorzugsweise bezüglich ihrer Quermittelebene (Q) im Wesentlichen spiegelsymmetrisch bzw. funktionssymmetrisch ausgeführt sind.
14. Energieführungskette nach einem der vorstehenden Gegenstände, dadurch gekennzeichnet, dass der Außendurchmesser (D) der Laufrollen (7A, 7B) mindestens 50%, vorzugsweise mindestens 66%, besonders bevorzugt mindestens 75% der Bauhöhe (H) von Schmalseite (61) zu Schmalseite (62) der Seitenteile beträgt.
15. Energieführungskette nach einem der vorstehenden Gegenstände, dadurch gekennzeichnet, dass an den Querstegen (12A, 12B) der Kettenglieder, die dem jeweils anderen Trum zugewandt sind, an der Außenseite kammartige Führungselemente (14) vorhanden sind, die beim Verfahren ineinandergreifen und einen seitlichen Versatz des Obertrums (3) gegenüber dem Untertrum (4) bewirken, sodass die Laufrollen (7; 7A, 7B) aneinander vorbei abrollen.
16. **Energieführungskette** zur Führung von Leitungen, wie z.B. Kabeln, Schläuchen oder dergleichen, mit einer Anzahl gelenkig miteinander verbundener Kettenglieder (20), die zueinander parallele Seitenteile (40; 50; 80) umfassen, die in Längsrichtung zu zwei Strängen (11A, 11B) verbunden sind, welche durch Querstege (12A, 12B) miteinander verbunden sind; wobei zwei in Längsrichtung (L) benachbarte Seitenteile jeweils um eine gemeinsame Schwenkachse (S) gegeneinander verschwenkbar sind, und die Energieführungskette so verfahrbar ist, dass sie ein Obertrum (3), ein Untertrum (4) und eine beide Trume verbindenden Umlenkbereich (5) bildet, wobei das Obertrum insbesondere auf dem Untertrum aufliegend verfahrbar ist; wobei
   - jeder der beiden Stränge (11A, 11B) aus alternierend aufeinanderfolgenden ersten und zweiten Seitenteilen (40; 50) besteht, wobei die ersten Seitenteile (40) gabelartig ausgeführt sind mit zwei in Längsrichtung gegenüberliegenden Gabelbereichen (40A, 40B), die je ein Paar seitlich beabstandeter Seitenwände (42) mit einer Laschenaufnahme (44) dazwischen aufweisen, und wobei die zweiten Seitenteile (50) laschenartig ausgeführt sind mit zwei in Längsrichtung gegenüberliegenden Laschenbereichen (50A, 50B), welche jeweils in eine Laschenaufnahme (44) eines benachbarten ersten Seitenteils (40) eingreifen; oder
   - jeder der beiden Stränge (11A, 11B) aus aufeinanderfolgenden als Gabellaschen ausgeführten Seitenteilen (80) besteht, wobei jede Gabellasche (80) jeweils in Längsrichtung (L) gegenüberliegend einen Gabelbereich (80A), der ein Paar seitlich beabstandeter Seitenwände (42) mit einer Laschenaufnahme (44) dazwischen aufweist, und einen Laschenbereich (80B) umfasst, welcher in eine Laschenaufnahme (44) eines benachbarten Seitenteils (80) eingreift;
   **dadurch gekennzeichnet, dass**
   - in Bezug auf ein verbundenes Seitenteilpaar, ein Seitenteil (40; 80) zwischen den Seitenwänden (42) des Gabelbereichs eine zur Laschenaufnahme (44) hin offene Führungsnut (46) bildet, die seitlich gegenüberliegende Querführungsflächen (46A, 46B) aufweist, welche sich kreisbogenförmig um die Schwenkasche (S) erstrecken, und dass der Laschenbereich (50A, 50B) des verbundenen Seitenteils (50; 80) mit mindestens einem Führungsvorsprung (56), der kreisbogenförmige Gegenflächen (56A, 56B) zur Führung an den Querführungsflächen (46A, 46B) aufweist, in die Führungsnut (46) des anderen Seitenteils (40; 80) eingreift.
17. Energieführungskette nach Gegenstand 16, umfassend eine bogenförmige Dämpfungsbrücke (990), welche in radialer Richtung vom Führungsvorsprung (956) vorsteht, insbesondere über einer Aussparung im Laschenbereich (950A, 950B), wobei die Dämpfungsbrücke (990) mit Anlaufflächen (991, 992) einer korrespondierenden Vertiefung (993) in der Führungsnut (946) zusammenwirkt, vorzugsweise in beide Schwenkrichtungen.
18. Energieführungskette nach dem Oberbegriff aus Gegenstand 16, insbesondere nach Anspruch 16 oder 17, dadurch gekennzeichnet, in Bezug auf ein verbundenes Seitenteilpaar, ein Seitenteil (50; 80) einen Zughaken (75A) aufweist welcher, in gestreckter Schwenkstellung beider Seitenteile, zwecks Zugkraftübertragung in eine Aussparung (75B) am anderen Seitenteil (40, 80) greift.
19. Energieführungskette nach Gegenstand 16, dadurch gekennzeichnet,
   dass die Energieführungskette Laufrollen (7A, 7B) zum Abrollen des Obertrum (3) auf dem Untertrum (4) umfasst und die Rotationsachse einer Laufrolle jeweils mit der gemeinsamen Schwenkachse (S) eines Paars von Seitenteilen zusammenfällt; und/oder
   gekennzeichnet durch Merkmale nach einem der Ansprüche 2-15.
20. **Seitenteilpaar** für eine Energieführungskette aus zwei gelenkig verbundenen Seitenteilen mit den Merkmalen nach mindestens einem der vorstehenden Gegenstände.
21. Krananlage umfassend eine Energieführungskette nach einem der vorstehenden Gegenstände 1 bis 19.
22. Verwendung einer Energieführungskette nach einem der vorstehenden Gegenstände 1 bis 19 für lange Verfahrwege, insbesondere Verfahrwege länger als 100m und/oder hohe Geschwindigkeiten und/oder an einer Krananlage, insbesondere an einem Schiffsentladekran.

## Patentansprüche

1. Energieführungskette zur Führung von Leitungen, wie z.B.
Kabeln, Schläuchen oder dergleichen, mit einer Anzahl gelenkig miteinander verbundener Kettenglieder (20), die zueinander parallele Seitenteile (40; 50; 80) umfassen, die in Längsrichtung zu zwei Strängen (11A, 11B) verbunden sind, welche durch Querstege (12A, 12B) miteinander verbunden sind;
wobei zwei in Längsrichtung (L) benachbarte Seitenteile jeweils um eine gemeinsame Schwenkachse (S) gegeneinander verschwenkbar sind, und die Energieführungskette so verfahrbar ist, dass sie ein Obertrum (3), ein Untertrum (4) und eine beide Trume verbindenden Umlenkbereich (5) bildet, wobei das Obertrum insbesondere auf dem Untertrum aufliegend verfahrbar ist; wobei
- jeder der beiden Stränge (11A, 11B) aus alternierend aufeinanderfolgenden ersten und zweiten Seitenteilen (40; 50) besteht, wobei die ersten Seitenteile (40) gabelartig ausgeführt sind mit zwei in Längsrichtung gegenüberliegenden Gabelbereichen (40A, 40B), die je ein Paar seitlich beabstandeter Seitenwände (42) mit einer Laschenaufnahme (44) dazwischen aufweisen, und wobei die zweiten Seitenteile (50) laschenartig ausgeführt sind mit zwei in Längsrichtung gegenüberliegenden Laschenbereichen (50A, 50B), welche jeweils in eine Laschenaufnahme (44) eines benachbarten ersten Seitenteils (40) eingreifen; oder
- jeder der beiden Stränge (11A, 11B) aus
aufeinanderfolgenden als Gabellaschen ausgeführten Seitenteilen (80) besteht, wobei jede Gabellasche (80) jeweils in Längsrichtung (L) gegenüberliegend einen Gabelbereich (80A), der ein Paar seitlich beabstandeter Seitenwände (42) mit einer Laschenaufnahme (44) dazwischen aufweist, und einen Laschenbereich (80B) umfasst, welcher in eine Laschenaufnahme (44) eines benachbarten Seitenteils (80) eingreift;
**dadurch gekennzeichnet, dass**
in Bezug auf ein verbundenes Seitenteilpaar,
- ein Seitenteil (40; 80) zwischen den Seitenwänden (42) des Gabelbereichs eine zur Laschenaufnahme offene Führungsnut (46) bildet, die seitlich gegenüberliegende Querführungsflächen (46A, 46B) aufweist, und dass
- der Laschenbereich (50A, 50B) des mit dem einen Seitenteil verbundenen anderen Seitenteils (50; 80) mit mindestens einem Führungsvorsprung (56), der Gegenflächen (56A, 56B) zur Führung an den Querführungsflächen (46A, 46B) aufweist, in die Führungsnut (46) des einen Seitenteils (40; 80) eingreift.

2. Energieführungskette nach Anspruch 1, umfassend eine bogenförmige Dämpfungsbrücke (990), welche einteilig mit dem Führungsvorsprung (56) hergestellt ist und/oder in radialer Richtung vom Führungsvorsprung (956) vorsteht, insbesondere über einer Aussparung im Laschenbereich (950A, 950B), wobei die Dämpfungsbrücke (990) mit Anlaufflächen (991, 992) einer korrespondierenden Vertiefung (993) in der Führungsnut (946) zusammenwirkt, vorzugsweise in beide Schwenkrichtungen.

3. Energieführungskette nach Anspruch 1 oder 2, **dadurch gekennzeichnet, dass**,
- die Querführungsflächen (46A, 46B) sich im Wesentlichen kreisbogenförmig um die Schwenkasche (S) erstrecken, und die Gegenflächen (56A, 56B) zur Führung an den Querführungsflächen (46A, 46B) im Wesentlichen kreisbogenförmig sind; und/oder
- die Führungsnut (46), welche das Seitenteil (40; 80) zwischen den Seitenwänden (42) des Gabelbereichs bildet, zu der Laschenaufnahme (44) hin offen ist; und/oder
- die Führungsnut (46) und der Führungsvorsprung (56) mittig zur Längsmittelebene der Seitenteile vorgesehen sind.

4. Energieführungskette nach Anspruch 1, 2 oder 3, **dadurch gekennzeichnet,**
**dass** die Energieführungskette Laufrollen (7A, 7B) zum Abrollen des Obertrums (3) auf dem Untertrum (4) umfasst.

5. Energieführungskette nach Anspruch 4, wobei die Seitenteile (40, 50; 80) jeweils eine dem jeweils anderen Trum zugewandte innere Schmalseite (61) und eine abgewandte äußere Schmalseite (62) aufweisen, **dadurch gekennzeichnet, dass**
- der Abstand (A) der Schwenkachse (S) zu der inneren Schmalseite (61) geringer ist als der Abstand (B) der Schwenkachse (S) zu der äußeren Schmalseite (62), und dass vorzugsweise die dem anderen Trum zugewandten Schmalseiten (61) in gestreckter Konfiguration eine im wesentlichen durchgehende Lauffläche (47A, 47B, 57; 87A, 87B, 87C) bilden, auf welcher das gegenüberliegende Trum abrollen kann.

6. Energieführungskette nach Anspruch 4 oder 5, **dadurch gekennzeichnet, dass**
- die Laufrollen (7A, 7B) jeweils in Aufnahmen zwischen den benachbarten Seitenteilen (40, 50; 80) aufgenommen sind und über deren Schmalseite (61) teilweise bzw. nur geringfügig vorstehen, wobei vorzugsweise jede Laufrolle (7A, 7B) jeweils zwischen einer Seitenwand (42) eines Gabelbereichs (40A, 40B; 80A) und einem in diesen eingreifenden Laschenbereich (50A, 50B; 80B) angeordnet ist, wobei besonders bevorzugt an rollentragenden Seitenteilpaaren jeweils zwei Laufrollen (7A, 7B) beidseitig des Laschenbereichs (50A, 50B; 80B) in der Laschenaufnahme vorgesehen sind; und/oder
- die Rotationsachse einer Laufrolle jeweils mit der gemeinsamen Schwenkachse (S) eines Paars von Seitenteilen zusammenfällt - .

7. Energieführungskette nach Anspruch 6, **dadurch gekennzeichnet, dass** die Führungsnut (46) und der Führungsvorsprung (56) zwischen den Laufrollen (7A, 7C) angeordnet sind.

8. Energieführungskette nach einem der vorstehenden Ansprüche, **dadurch gekennzeichnet, dass** die bzw. alle Seitenteile (40, 50; 80) in jedem Strang jeweils durch einen separaten Gelenkbolzen (70) miteinander verbunden sind, insbesondere wobei die beiden Seitenwände (42) jedes Gabelbereichs (40A, 40B; 80A) und der Laschenbereich (50A, 50B; 80B) jeweils eine durchgehende Aufnahmeöffnung (48; 58) für einen separaten Gelenkbolzen (70) aufweisen und durch einen eingesetzten Gelenkbolzen relativschwenkbar miteinander verbunden sind, wobei der Gelenkbolzen vorzugsweise zwei Bolzenteile (70A, 70B) umfasst, welche durch eine, insbesondere genau eine, Schraube (70C), vorzugsweise Schneidschaube (70C) miteinander verschraubt sind.

9. Energieführungskette nach Anspruch 8, **dadurch gekennzeichnet,**
- **dass** zumindest ein Bolzenteil (70A, 70B) des separaten Gelenkbolzens (70) drehfest mit dem Laschenbereich (50A, 50B; 80B) verbunden ist, insbesondere durch Formschluss, und/oder die beiden Seitenwände (42) mittels ihrer Aufnahmeöffnungen (48) des Gabelbereichs um die Schwenkachse (S) schwenkbar am separaten Gelenkbolzen (70) gelagert sind; und/oder
- **dass** die Laufrollen (7A, 7B) jeweils am Gelenkbolzen (70) drehbar gelagert sind, vorzugsweise durch ein Kugellager (7C); und/oder
- **dass** am Gelenkbolzen (70) jeweils ein Gleitlagerring (100) zur schwenkbaren Lagerung der Seitenwände (42) vorgesehen ist, wobei der Gleitlagerring insbesondere drehbar am Gelenkbolzen (70) angeordnet und drehfest an einer Seitenwand (42) befestigt ist.

10. Energieführungskette nach einem der vorstehenden Ansprüche, **dadurch gekennzeichnet, dass** die Seitenteile (40, 50; 80) einteilig aus Kunststoff hergestellt sind, vorzugsweise als Spritzgussteile.

11. Energieführungskette nach einem der vorstehenden Ansprüche, **dadurch gekennzeichnet, dass** in beiden Strängen (11A, 11B) baugleiche Seitenteile (40, 50) vorgesehen sind, insbesondere jeweils identische gabelartige erste Seitenteile (40) und identische laschenartige zweite Seitenteile (50), wobei die ersten und zweiten Seitenteile (40; 50) vorzugsweise bezüglich ihrer Quermittelebene (Q) im Wesentlichen spiegelsymmetrisch bzw. funktionssymmetrisch ausgeführt sind.

12. Energieführungskette nach einem der vorstehenden Ansprüche, insbesondere nach Anspruch 11, **dadurch gekennzeichnet, dass** baugleiche gabelartige erste Seitenteile (40) und baugleiche laschenartige zweite Seitenteile (50) vorgesehen sind, die zu ihrer Quermittelebene (Q) spiegelsymmetrisch ausgeführt sind und dass
- das gabelartige erste Seitenteil (40) zwei bezüglich seiner Quermittelebene (Q) spiegelsymmetrische Führungsnuten (46) aufweist, und
- das laschenartige zweite Seitenteil (50) zwei bezüglich seiner Quermittelebene (Q) spiegelsymmetrische Führungsvorsprünge (56) aufweist.

13. Energieführungskette nach einem der vorstehenden Ansprüche, **dadurch gekennzeichnet, dass** in Bezug auf ein verbundenes Seitenteilpaar, ein Seitenteil (50; 80) einen Zughaken (75A) aufweist, welcher, in gestreckter Schwenkstellung beider Seitenteile, zwecks Zugkraftübertragung in eine Aussparung (75B) am anderen Seitenteil (40, 80) greift.

14. Seitenteilpaar für eine Energieführungskette aus zwei gelenkig verbundenen Seitenteilen mit den Merkmalen nach mindestens einem der vorstehenden Ansprüche.
